# EUROPEAN PATENT SPECIFICATION

(11) **EP 4 082 972 B1**
(45) Date of publication and mention of the grant of the patent: **20.08.2025**
(21) Application number: 20906352.8
(22) Date of filing: 24.12.2020
(51) Int. Cl.: C01G 41/00, C08L 101/00, C08K 3/22, C03C 14/00, C01G 41/02

(54) **NEAR-INFRARED ABSORBING MATERIAL PARTICLES, NEAR-INFRARED ABSORBING MATERIAL PARTICLE DISPERSING SOLUTION, AND NEAR-INFRARED ABSORBING MATERIAL PARTICLE DISPERSION**
NAHINFRAROT-ABSORBIERENDE MATERIALTEILCHEN, DISPERSIONSLÖSUNG AUS NAHINFRAROT-ABSORBIERENDEN MATERIALTEILCHEN UND DISPERSON AUS NAHINFRAROT-ABSORBIERENDEN MATERIALTEILCHEN
PARTICULES DE MATÉRIAU ABSORBANT DANS LE PROCHE INFRAROUGE, SOLUTION DE DISPERSION DE PARTICULES DE MATÉRIAU ABSORBANT DANS LE PROCHE INFRAROUGE ET DISPERSION DE PARTICULES DE MATÉRIAU ABSORBANT DANS LE PROCHE INFRAROUGE

(30) Priority: 25.12.2019 JP 2019234889
(43) Date of publication of application: 02.11.2022
(73) Proprietor: SUMITOMO METAL MINING CO., LTD., Tokyo 105-8716 (JP)
(72) Inventor: NOSHITA, Akinari, Isa-shi, Kagoshima 895-2501 (JP); NAKAYAMA, Hiroki, Isa-shi, Kagoshima 895-2501 (JP); KAWANO, Takahisa, Isa-shi, Kagoshima 895-2501 (JP); CHONAN, Takeshi, Isa-shi, Kagoshima 895-2501 (JP)
(74) Representative: Jones, Nicholas Andrew
(86) International application number: PCT/JP2020/048402
(87) International publication number: WO 2021/132450

(56) References cited:
- EP-A1- 3 431 565
- WO-A1-2017/159791
- WO-A1-2019/155996
- JP-A- 2019 142 762
- KR-B1- 101 182 194
- KUMAGAI N ET AL: "Thermodynamics and kinetics of electrochemical intercalation of lithium into Li"0"."5"0WO"3"."2"5 with a hexagonal tungsten bronze structure", SOLID STATE IONICS, NORTH HOLLAND PUB. COMPANY. AMSTERDAM; NL, NL, vol. 98, no. 3-4, 2 June 1997 (1997-06-02), pages 159 - 166, XP004126142, ISSN: 0167-2738, DOI: 10.1016/S0167-2738(97)00114-8
- WAGATA HAJIME ET AL: "Fabrication of Combined One-Dimensional and Three-Dimensional Structure of Potassium Tungstate Crystal Layers by Spray Deposition with Polystyrene Colloidal Crystal Templates", CRYSTAL GROWTH & DESIGN, vol. 13, no. 8, 12 July 2013 (2013-07-12), US, pages 3294 - 3298, XP055945310, ISSN: 1528-7483, DOI: 10.1021/cg400714e
- LIU JING-XIAO; SHI FEI; DONG XIAO-LI; XU QIANG; YIN SHU; SATO TSUGIO: "Nanocrystalline CsxWO3particles: Effects of N2annealing on microstructure and near-infrared shielding characteristics", MATERIALS CHARACTERIZATION, vol. 84, 1 January 1900 (1900-01-01), US , pages 182 - 187, XP028736500, ISSN: 1044-5803, DOI: 10.1016/j.matchar.2013.08.001
- ZHONG, Q. ; COLBOW, K.: "Electrochromic properties of cesium tungstate with pyrochlore structure", THIN SOLID FILMS, vol. 205, no. 1, 30 October 1991 (1991-10-30), AMSTERDAM, NL , pages 85 - 88, XP024614783, ISSN: 0040-6090, DOI: 10.1016/0040-6090(91)90475-D

## Description

### TECHNICAL FIELD

The present invention relates to near-infrared absorbing material particles, near-infrared absorbing material particle dispersing solution, and near-infrared absorbing material particle dispersion.

### BACKGROUND OF THE INVENTION

Near-infrared rays contained in sunlight penetrate windows or the like, and enter the room, raising the surface temperature of indoor walls and floors and also increasing the indoor temperature. In order to make an indoor thermal environment comfortable, it has been conventionally performed to keep indoor temperature from rising by blocking near-infrared rays that enter through windows or the like, for example, by using light shielding materials for window materials.

As light shielding materials used in windows or the like, Patent Document 1 proposes a light shielding film containing black fine powders including inorganic pigments such as carbon black, titanium black, and the like or organic pigments such as aniline black and the like.

In addition, Patent Document 2 discloses a heat insulating sheet in which a strip-shaped film having infrared reflection and a strip-shaped film having infrared absorption are woven as warp filaments or weft filaments, respectively. Patent Document 2 also discloses depositing aluminum vapor to a synthetic resin film and further laminating the synthetic resin films as a strip-shaped film having infrared reflection.

In Patent Document 3, an infrared-shielding material fine particle dispersing solution in which the infrared-shielding material fine particles are dispersed in a medium, wherein the infrared-shielding material fine particles contain tungsten oxide fine particles and/or composite tungsten oxide fine particles, and wherein the dispersed particle diameter of the infrared-shielding material fine particles is in the range of 1 nm to 800 nm, is proposed.

Patent Document 4 discloses near-infrared shielding fine particles which are composite tungsten oxide fine particles containing a hexagonal crystal structure, in which a lattice constant of the composite tungsten oxide fine particles is 7.3850 Å or more and 7.4186 Å or less on the a-axis, and 7.5600 Å or more and 7.6240 Å or less on the c-axis, and a particle size of the near-infrared shielding material fine particles is 100 nm or less.

### PRIOR ART DOCUMENTS

### Patent Documents

Patent Document 1: Japanese Patent Application Laid-Open No. 2003-029314
Patent Document 2: Japanese Unexamined Patent Publication No. H9-107815
Patent Document 3: International Publication No. 2005/037932
Patent Document 4: EP 3 431 565 A1

### SUMMARY OF THE INVENTION

### Problems to be solved by the Invention

However, the inventors have found that the proposals and disclosures described in Patent Document 1 and Patent Document 2 have the following problems.

The black fine powder described in Patent Document 1 has a large absorption in the visible light region. For this reason, the color tone of the window material or the like to which the black fine powder is applied is darkened, and the use method and application are considered to be limited.

The windows or the like to which a metal deposition film is applied, such as the heat insulating sheet described in Patent Document 2, have a half-mirror appearance. For this reason, when windows with metal deposition film applied were used outdoors, the reflection was bright and the view was considered problematic.

Patent Document 3 was performed to solve the above-described problem. The near-infrared shielding material particles are sufficiently transparent, do not have a half-mirror appearance, efficiently shield invisible near-infrared rays of wavelengths 780 nm or longer, are transparent, and do not change their color tone. The near-infrared shielding material particles, near-infrared shielding material particle dispersing solution, near-infrared shielding bodies, and near-infrared shielding material particles and their manufacturing methods were provided in Patent Document 3. In recent years, however, demands for properties such as weather resistance or the like have been increasing.

An aspect of the present invention is to provide near-infrared absorbing material particles having excellent weather resistance.

### Means for Solving the Problems

In one aspect of the invention, near-infrared absorbing material particles contain composite tungsten oxide particles represented by a general formula MₓW_{y}O_{z}, wherein the element M in the formula is one or more of elements selected from Cs, Rb, K, Tl, In, Ba, Li, Ca, Sr, Sn, Na, Cu, Ag, Yb and Si; the W is tungsten; the O is oxygen; the x, y, and z satisfy 0.001≤x/y≤1 and 3. 0<z/y<3.4, wherein a diameter of the near-infrared absorbing material particles is in the range of 10 nm to 100 nm, and wherein the diameter is the diameter of the smallest circle circumscribing the particle.

### Effects of the Invention

In an aspect of the present invention, the present invention is to provide near-infrared absorbing material particles having excellent weather resistance.

### BRIEF DESCRIPTION OF THE DRAWINGS

FIG. 1 is an explanatory drawing illustrating a hybrid plasma reactor device used in Example 1; and
FIG. 2 is an explanatory drawing illustrating a high-frequency plasma reactor device used in Example 2.

### DETAILED DESCRIPTION OF THE INVENTION

Hereinafter, the near-infrared absorbing material particles, the near-infrared absorbing material particle dispersing solution, and the near-infrared absorbing material particle dispersion according to the present embodiment will be described in detail in the following order:
1. Near-infrared absorbing material particles,
2. A method of manufacturing near-infrared absorbing material particles,
3. Near-infrared absorbing material particle dispersing solution, and
4. Near-infrared absorbing material particle dispersion.

### 1. Near-infrared Absorbing Material Particles

The near-infrared absorbing material particles according to the present embodiment can include particles of composite tungsten oxide represented by the general formula MₓW_{y}O_{z}.

The element M , the values of the ratios x/ y and y/z and of the diameter of the material particles are as disclosed in claim 1.

The inventors of the present invention have studied intensively to produce the near-infrared absorbing material particles with excellent weather resistance. In this specification, excellent weather resistance is that the near-infrared absorption characteristics do not significantly change even in the case of a high-temperature environment.

Generally, materials containing free electrons are known to exhibit a reflective absorption response due to plasma oscillation to electromagnetic waves of wavelengths from 200 nm to 2600 nm near the region of sunlight rays. It has been known that when the powder of the material containing the free electrons is particles smaller than the wavelength of the light, the geometric scattering of the visible light region (wavelength 380 nm or more and 780 nm or less) is reduced, and the transparency of the visible light region is obtained. It should be noted that the term "transparency" is used to mean that light in the visible light region is less scattered and has a high transmittance.

The tungsten oxide represented by the general formula WO₃₋ₐ and so-called tungsten bronze in which a positive element such as Na or the like is added to the tungsten trioxide are known to be conductive materials and materials containing free electrons. Analysis of these materials, such as single crystals or the like, suggests a free electron response to light in the near-infrared region.

Generally, there is no effective free electron in tungsten trioxide (WO₃). Therefore, the absorption reflection characteristics in the near-infrared region is low, and tungsten trioxide is not effective as a near-infrared absorbing material. It is known that by reducing the ratio of oxygen to tungsten in tungsten trioxide becomes less than 3, free electrons are generated in the tungsten oxide.

In addition, the composite tungsten oxide is conventionally formed by adding elemental M to the tungsten oxide. This is because free electrons are generated in the composite tungsten oxide by this configuration, and absorption characteristics derived from free electrons are developed in the near-infrared region, and it becomes effective as a near-infrared absorbing material at a wavelength of about 1000 nm.

The inventors of the present invention have conducted further research on tungsten oxides and composite tungsten oxides in order to produce near-infrared absorbing material particles that are highly weather resistant. As a result, in the near-infrared absorbing material particles containing the composite tungsten oxide particles represented by the general formula MₓW_{y}O_{z}, both the near-infrared absorbing characteristics and weather resistance have been achieved by adjusting the values of y and z in the general formula to 3. 0<z/y<3.4, thereby completing the present invention.

The near-infrared absorbing material particles of the present embodiment can contain composite tungsten oxide particles represented by the general formula MₓW_{y}O_{z} as described above. The near-infrared absorbing material particles of the present embodiment may also be formed from particles of the composite tungsten oxide as described by the above general formula. However, even in this case, it does not preclude the inclusion of unavoidable components in the manufacturing process.

Hereinafter, the element M in the above-described general formula is one or more elements selected from Cs, Rb, K, Tl, In, Ba, Li, Ca, Sr, Sn, Na, Cu, Ag, Yb and Si.

When the composite tungsten oxide particles contain crystals having a hexagonal crystal structure, the transmittance of the visible light region of the particles is particularly improved and the absorption of the near-infrared region is particularly improved. The hexagonal crystal structure is constituted by an octahedron formed by WO₆, 6 pieces of which are assembled together to form a hexagonal void (tunnel), and the element M is arranged in the void to form a unit, and a large number of these units are assembled.

It should be noted that this is not limited to the case where the composite tungsten oxide particles contain crystals having a hexagonal crystal structure. For example, if the unit structure, that is, the octahedron formed by WO₆ units, assembles 6 pieces and forms a hexagonal void, and the element M is disposed in the void. Accordingly, the transmittance of the visible light region can be particularly improved, and the absorption of the near-infrared region can be particularly improved. Thus, composite tungsten oxide particles do not contain crystals having a hexagonal crystal structure, and even if they have only the unit structure described above, can obtain a high effect.

As noted above, the absorption of the near-infrared region is particularly enhanced when the composite tungsten oxide particles contain a structure in which the cation of the element M is added to the hexagonal void. In general, hexagonal crystals or the above-described structures are easily formed when the element M having a large ionic radius is added. Specifically, when the composite tungsten oxide contains one or more elements selected from Cs, Rb, K, Tl, In, Ba, Li, Ca, Sr, and Sn as the element M, hexagonal crystals or the above-described structures are easily formed. Therefore, the particles of the composite tungsten oxide preferably contain one or more elements selected from Cs, Rb, K, Tl, In, Ba, Li, Ca, Sr, and Sn as the element M, and more preferably, the element M is one or more elements selected from Cs, Rb, K, Tl, In, Ba, Li, Ca, Sr, and Sn.

Furthermore, in the particles of composite tungsten oxide containing one or more kinds selected from the element M having a large ionic radius from Cs and Rb, hexagonal crystals or the structure described above are easily formed, and both absorption in the near-infrared region and transmission in the visible light region can be achieved, and particularly high performance can be achieved.

When the particles of composite tungsten oxide having a hexagonal crystal structure have a uniform crystal structure, x/y indicating the content of the element M relative to 1 mole of tungsten is preferably 0.2 or more and 0.5 or less, and more preferably 0.33. By the value of x/y being 0.33, it is considered that the element M is positioned in all of the hexagonal voids.

The composite tungsten oxide particles may also contain crystals other than the hexagonal crystals described above, such as tetragonal crystals or cubic crystals, which may be useful as near-infrared absorbing materials.

Each of the cubic and tetragonal composite tungsten oxides also has a suitable range or upper limit for the amount of element M added derived from the structure. The upper limit of x/y, which is the content ratio of the M element to one mole of tungsten, is 1 mole for cubic crystals and 0.5 moles for tetragonal crystals. The upper limit of x/y, the content ratio of 1 mole of the element M to 1 mole of tungsten, varies depending on the type of element M or the like, but in the case of tetragonal crystals, the industrial manufacturing is easy at about 0.5 moles.

However, these structures are not limited to the present invention as these structures are difficult to define simply and as such are examples of particularly fundamental ranges.

The structure of the crystals contained in the composite tungsten oxide particles tends to change the position of absorption in the near-infrared region. The absorption position in this near-infrared region tends to move to the longer wavelength side for tetragonal crystals than for cubic crystals, and even more so for hexagonal crystals than for tetragonal crystals. In conjunction with the variation in the absorption position, the absorption in the visible light region is lowest for hexagonal crystals, followed by tetragonal crystals, and cubic crystals have the greatest absorption in the visible light region among these crystals. Therefore, a crystal system to be contained according to the required performance is preferably selected. For example, when used in applications where it is desired to transmit light in the more visible light region to absorb light in the more near-infrared region, composite tungsten oxide particles preferably contain hexagonal crystals. However, the tendency of the optical properties described herein is not limited to such a general tendency and varies depending on the type of additive element, the amount added, and the amount of oxygen.

By combining the above-mentioned oxygen, in which the amount of oxygen is controlled, with the addition of element M which generates free electrons, to the composite tungsten oxide, a near-infrared absorbing material with more efficient and excellent weather resistance can be obtained. When the general formula of composite tungsten oxide which is a near-infrared absorbing material combined with the controlled amount of oxygen and the addition of elements that generate free electrons is described as MₓW_{y}O_{z}, x and y are defined as 0.001≤x/y≤1 and preferably satisfy 0.20≤x/y≤0.37.

In addition, y and z of the above general formula satisfy the relationship of 3.0<z/y<3.4, more preferably satisfy 3.0<z/y<3.3, and even more preferably satisfy 3.0<z/y<3.22.

Patent Document 1 discloses that the element M is disposed in all of the hexagonal voids when the composite tungsten oxide fine particles having a hexagonal crystal structure are considered to have the value z/y of 3 and the value x/y of 0.33.

The composite tungsten oxide particles contained by the near-infrared absorbing material particles in the present embodiment have been confirmed by chemical analysis to have the value z/y exceeding 3. On the other hand, the powder X-ray diffraction method confirmed that the composite tungsten oxide particles contained in the near-infrared absorbing material particles according to the present embodiment may have a tungsten bronze structure that is tetragonal, cubic, or hexagonal when the value z/y is 3. Thus, the composite tungsten oxide particles contained by the near-infrared absorbing material particles of the present embodiment preferably contain crystals of one or more crystalline structures selected from hexagonal, tetragonal, and cubic crystals. Containing crystals of the crystalline structure described above provides particularly excellent near-infrared absorption characteristics and visible light transmission characteristics.

If the value z/y is greater than 3, the oxygen atoms are thought to be entering the crystals of the composite tungsten oxide particles. As a result, the oxygen atom enters the crystal, and even if the crystal is exposed to heat or moisture, it is considered that excellent weather resistance can be realized without deteriorating the crystal of the composite tungsten oxide particles.

The crystal structure of the composite tungsten oxide particles contained in the near-infrared absorbing material particles according to the present embodiment can be confirmed by the powder X-ray diffraction method (θ-2θ method) with an X-ray diffraction pattern.

The particles of the near-infrared absorbing material according to the present embodiment have a maximum value in the range from 350 nm to 600 nm and a minimum value in the range from 800 nm to 2100 nm. Thus, the particles exhibit excellent near-infrared absorption effect and weather resistance. The near-infrared absorbing material particles in the present embodiment preferably have a maximum value in the range of 440 nm to 600 nm, and a minimum value in the range of 1150 nm to 2100 nm.

In addition, the particle size of the near-infrared absorbing material particles according to the present embodiment is in the range of 10 nm to 100 nm, preferably in the range of 10 nm to 80 nm, particularly preferably in the range of 10 nm to 60 nm, and most preferably in the range of 10 nm to 40 nm. If the particle size of the near-infrared absorbing material particles is in the range of 10 nm to 40 nm, the best near-infrared absorbing characteristics are achieved.

Here, the particle size is the diameter of the individual particles of the near-infrared absorbing material that are not agglomerated, that is, the particle size of the individual particles.

Here, the particle size does not include the diameter of the agglomeration of the particles of the near-infrared absorbing material, but differs from the dispersed particle size.

The particle size in the embodiment can be calculated by measuring the diameter of multiple particles, for example, with near-infrared absorbing material particles dispersed, using a transmission electron microscope (TEM) or the like. Since the near-infrared absorbing material particles are usually irregular, the diameter of the smallest circle circumscribing the particle can be used as the particle diameter of the particles. For example, when the particle size of a plurality of particles is measured for each particle using a transmission electron microscope as described above, the particle size of all particles preferably satisfies the above-described range. The number of particles to be measured is not particularly limited, but preferably, for example, 10 to 50 particles.

In addition, from the viewpoint of exerting the excellent near-infrared absorption property, the crystallite diameter of the composite tungsten oxide particles is preferably 10 nm or more and 100 nm or less, more preferably 10 nm or more and 80 nm or less, further preferably 10 nm or more and 60 nm or less, and particularly preferably 10 nm or more and 40 nm or less. This is because crystallite sizes ranging from 10 nm to 40 nm exhibit particularly excellent near-infrared absorption characteristics. The crystallite size of the composite tungsten oxide particles contained in the near-infrared absorbing material particles can be calculated using the Rietvelt method from the X-ray diffraction pattern measured by the powder X-ray diffraction method (θ-2θ method).

The general formula of the composite tungsten oxide contained in the composite tungsten oxide particles is MₓW_{y}O_{z} as described above. When the element M contains one or more elements selected from Cs, Rb and the composite tungsten oxide has a hexagonal crystal structure, the lattice constant of the composite tungsten oxide is preferably in the range of 7.3850 Å to 7.4186 Å on the a-axis and in the range of 7.5600 Å to 7.6240 Å on the c-axis. By using the lattice constants as described above for the composite tungsten oxide, particularly excellent properties for near-infrared absorption characteristics and weather resistance can be achieved. In the above-described case, the element M is more preferably constituted by one or more kinds of elements selected from Cs and Rb. The lattice constants can be calculated using the Rietvelt method.

In addition, since the near-infrared absorbing material particle dispersion containing the composite tungsten oxide particles in accordance with the present embodiment absorbs a large amount of light in the near-infrared region, in particular, around 1000 nm, the transmission color tone of the near-infrared absorbing material dispersion is often changed from blue to green.

The dispersed particle size of the particles of the near-infrared absorbing material according to the present embodiment can be selected according to the purpose of use. First, when used in a transparent application, a dispersed particle size is preferably 800 nm or less. This is because particles with a dispersed particle size of 800 nm or less do not completely shield the light by scattering, and can maintain visibility in the visible light range, while at the same time maintaining transparency efficiently.

In particular, when the transparency in the visible light region is emphasized, it is preferable to further consider scattering by particles. The dispersed particle size includes the diameter of the agglomerate of the near-infrared absorbing material particles, and is different from the above-mentioned particle size.

When emphasizing the reduction of scattering by the above-described particles, the dispersed particle size of the particles of the near-infrared absorbing material according to the present embodiment is preferably 200 nm or less, more preferably in the range of 10 nm to 200 nm, and even more preferably in the range of 10 nm to 100 nm. This is because, if the dispersed particle size is small, the scattering of light in the visible light range of 380 nm to 780 nm by geometric scattering or Mie scattering is reduced, so that the dispersion containing the particles of the near-infrared absorbing material according to the present embodiment becomes like a cloudy glass, and the clear transparency is not obtained. That is, when the dispersed particle size is less than 200 nm, the above geometric scattering or Mie scattering is reduced to the Rayleigh scattering region. In the Rayleigh scattering range, the scattered light is proportional to the sixth power of the dispersed particle size, so that the scattering decreases as the dispersed particle size decreases and transparency improves. Furthermore, when the dispersed particle size is 100 nm or less, the scattered light is very small and is preferable. From the viewpoint of avoiding light scattering, the dispersed particle size is preferably smaller, and if the dispersed particle size is 10 nm or more, industrial manufacture becomes easier.

By setting the aforementioned dispersed particle size to 800 nm or less, the haze (haze value) of the near-infrared absorbing material particle dispersion in which the near-infrared absorbing material particles are dispersed in the medium may be 10% or less with a visible light transmittance of 85% or less. In particular, when the dispersed particle size is 100 nm or less, the haze may become 1% or less.

It should be noted that the scattering of light in the near-infrared absorbing material particle dispersion needs to be examined in terms of the dispersed particle size because of the agglomeration of the near-infrared absorbing material particles.

The near-infrared absorbing material particles of the present embodiment may be coated with a compound whose surface contains one or more elements selected from Si, Ti, Zr, and Al. The surface of the near-infrared absorbing material particles can be coated with the compound to enhance weather resistance in particular.

As the compound containing one or more elements selected from Si, Ti, Zr, and Al, one or more kinds selected from a hydrolysis product of a metal chelate compound containing Si, Ti, Zr, and Al, a polymer of a hydrolysis product of a metal chelate compound, a hydrolysis product of a metal cyclic oligomer compound, and a polymer of a hydrolysis product of a metal cyclic oligomer compound can be preferably used. Since the metal chelate compound and the metal cyclic oligomer compound are preferably metal alkoxides, metal acetylacetonates, or metal carboxylates, one or more kinds selected from an ether bond, an ester bond, an alkoxy group, and an acetyl group are preferably used.

The surface of the near-infrared absorbing material particles is then preferably coated with these compounds prior to preparation of the near-infrared absorbing material particle dispersing solution.

### (1) Surface Treatment Agents, Coating Film Materials, and the like

Hereinafter, surface treatment agents and coating film materials of the near-infrared absorbing material particles in the present embodiment will be described in the order of:
(1-1) Metal Chelate Compounds,
(1-2) Metal Cyclic Oligomer Compounds,
(1-3) Hydrolysis Product of the Metal Chelate Compounds and the Metal Cyclic Oligomer Compounds, and the Polymer thereof, and
(1-4) Additive Amount of Surface Treatment Agents and Film Thickness.

### (1-1) Metal Chelate Compounds

The metal chelate compound is preferably one or more kinds selected from a Si-based, Ti-based, Zr-based, or Al-based chelate compound containing an alkoxy group.

As the Si-based chelating compound, a tetrafunctional silane compounds represented by the general formula Si(OR)₄ (where R is a monovalent hydrocarbon group having 1 or more carbon atoms but not more than 6 carbon atoms of the same or different species) or the hydrolysis product thereof may be used. Examples of tetrafunctional silane compounds include tetramethoxysilane, tetraethoxysilane, tetrapropoxysilane, tetrabutoxysilane, and the like.
As the Si-based chelating compound, by hydrolyzing a part or all of the alkoxy groups of the alkoxy silane monomer above, it is possible to apply a silanol group (Si-OH) group having silane monomer, oligomer, and polymer self-condensed through hydrolysis reaction.

The hydrolysis product of the tetrafunctional silane compounds includes a silane monomer having the silanol (Si-OH) group hydrolyzed in part or in whole by the alkoxy group, an oligomer having the tetramer to the pentamer or less, and a polymer having the weight average molecular weight (Mw) of 800 or more and 8000 or less (silicone resin). The hydrolysis product of the tetrafunctional silane compounds means the entire hydrolysis product of the tetrafunctional silane compounds. In addition, the alkoxysilyl group (Si-OR) in the alkoxysilane monomer need not all hydrolyze to a silanol group (Si-OH) during the process of hydrolysis.

Examples of Ti-based chelating compounds include titanium alkolates such as methyl titanate, ethyl titanate, isopropyl titanate, butyl titanate, 2-ethylhexyl titanate, and polymers thereof, titanium acetyl acetonate, titanium tetraacetyl acetonate, titanium octylene glycolate, titanium ethyl acetate, titanium lactate, titanium triethanol aminate, and the like.

Examples of Zr-based chelating compounds include zirconium alkolates such as zirconium ethylate, zirconium butyrate, or polymers thereof; zirconium tributoxy stearate, zirconium tetraacetylacetonate, zirconium tributoxyacetylacetonate, zirconium dibutoxy bis (acetyl acetonate), zirconium tributoxyethyl acetoacetate, zirconium butoxyacetylacetonate bis(ethylacetoacetate), and the like.

Examples of Al-based chelating compounds include aluminum alkolates such as aluminum ethylate, aluminum isopropylate, aluminum sec-butyrate, mono-sec-butoxyaluminum diisopropylate or polymers thereof; ethyl acetoacetate aluminum diisopropylate, aluminum tris (ethyl acetoacetate), octylacetoacetate aluminum diisopropylate, stearylacetoaluminum diisopropylate,
aluminum monoacetylacetonate bis (ethyl acetoacetate), aluminum tris (acetylacetonate), aluminum ethylacetoacetate diisopropylate, and the like.

These compounds are aluminum chelate compounds containing an alkoxy group obtained by dissolving aluminum alkolate in an aprotic solvent, petroleum solvent, hydrocarbon solvent, ester solvent, ketone solvent, ether solvent, amide solvent, and the like, adding β-diketone, β-keto ester, monovalent or polyhydric alcohol, fatty acid, and the like to this solution. The mixture is heated and refluxed, and the aluminum chelate compound containing an alkoxy group is obtained by a substitution reaction of ligands.

### (1-2) Metallic Cyclic Oligomer Compounds

The metallic cyclic oligomer compound preferably contains one or more kinds selected from Al-based, Zr-based, Ti-based, and Si-based cyclic oligomer compounds. Examples include cyclic aluminum oxide octylate, cyclic aluminum oxide isopropylate, cyclic aluminum oxide stearate, and the like.

### (1-3) Hydrolysis Product of Metal Chelate Compounds and Metal Cyclic Oligomer Compounds, and the Polymer thereof

As a hydrolysis product of a metal chelate compound or a metal cyclic oligomer compound, and a polymer thereof, one or more kinds selected from the group consisting of an alkoxy group, an ether bond, and an ester bond of the above-described metal chelate compound or a metal cyclic oligomer compound, can be used, in which all of the alkoxy groups, the ether bonds, and the ester bonds are hydrolyzed, and the hydrolysis product in which the hydroxyl group and the carboxyl group are formed, the partial hydrolysis product in which a part is hydrolyzed, and the polymerization product in which one or more types selected from the polymerized products self-condensed through the hydrolysis reaction can be used.

The surface of the near-infrared absorbing material particles can be coated with one or more of the above hydrolysis products or polymerized products to form a coating film, which is the near-infrared absorbing material particle of this embodiment.

In other words, the above-described hydrolysis product is not limited to the hydrolysis product in which all of the alkoxy groups or the like are hydrolyzed, but includes a partial hydrolysis product.

In this specification, the term "a coating film formed on the surface of particles of a near-infrared absorbing material by using one or more kinds of a hydrolysis product of a metal chelate compound, a polymer of a hydrolysis product of a metal chelate compound, a hydrolysis product of a metal cyclic oligomer compound, and a polymer of a hydrolysis product of a metal cyclic oligomer compound" may be simply referred to as a "coating film".

For example, in a reaction system in which an organic solvent such as an alcohol is involved, in general, even if sufficient water is present in the system in terms of the stoichiometric composition, the alkoxy groups of the metal chelate compounds or the metal cyclic oligomer compounds as the starting material, the ether bonds, and the ester bonds are not all hydrolyzed, depending on the type and concentration of the organic solvent. Therefore, depending on the conditions of the surface coating method described below, the hydrolysis product may be in the amorphous state in which carbon C is incorporated into the molecule even after hydrolysis. As a result, the coating may contain one or more kinds selected from unresolved metal chelated compounds and metal cyclic oligomeric compounds. However, there is no particular problem if the coating film contains a small amount of near-infrared absorbing material particles that do not cause agglomeration.

Considering the case where one or more selected types of undecomposed metal chelate compounds and metal cyclic oligomer compounds are contained in the coating film may rapidly promote hydrolysis reactions of silane coupling agents, silane alkoxides, and polysilazanes in the dispersion (coating solution) used to prepare a near-infrared absorbing material dispersion and the like in subsequent processes, as well as dehydration condensation reactions. As a result of the rapid progress of the reaction, polymerized silane coupling agents, silane alkoxides, and polysilazanes act as cross-linking agents and may cause agglomeration of near-infrared absorbing material particles in the near-infrared absorbing material particle dispersing solution to be surface treated.

In order to avoid such a situation, when the coating film contains an undissolved metal chelate compound or a metal cyclic oligomer compound, it is preferable to proceed with decomposition of these compounds in "(2-5) Heat Treatment Process" to allow the compounds to react until the compounds become polymers of reactive hydrolysis products.

That is, in the coating film covering the surface of the near-infrared absorbing material particles, a part or all of the alkoxy groups, the ether bonds, and the ester bonds contained in the above-mentioned metal chelate compound and metal cyclic oligomer compound are preferably hydrolyzed. The hydrolysis product formed into the hydroxyl group or the carboxyl group is preferably a polymer which is self-condensed through the hydrolysis reaction.

### (1-4) Additive Amount of Surface Treatment Agents and Film Thickness

The additive amount of the above-mentioned metal chelate compound or metal cyclic oligomer compound when forming the coating film is not particularly limited. The additive amount of the metal chelate compound or the metal cyclic oligomer compound is preferably 0.05 parts by mass or more and 1000 parts by mass or less, more preferably 5 parts by mass or more and 500 parts by mass or less, and 50 parts by mass or more and 250 parts by mass or less with respect to 100 parts by mass of the near-infrared absorbing material particles.

This is because when the additive amount of metal chelate compound or metal cyclic oligomer compound is 0.05 parts by mass or more in terms of metal element, the hydrolysis products of the above compounds and the polymers of the hydrolysis products exert the effect of covering the surface of the near-infrared absorbing material particles. That is, a particularly high effect can be obtained for improving weather resistance.

In addition, if the additive amount of the metal chelate compound or the metal cyclic oligomer compound is 1000 parts by mass or less in terms of the metal element, the amount of absorbing with respect to the near-infrared absorbing material particles becoming too large can be avoided. Moreover, the improvement of weather resistance by surface coating is not saturated, and the coating effect can be improved.

When the additive amount of the metal chelate compound or the metal cyclic oligomer compound is 1000 parts by mass or less in terms of the metal element, the amount of absorbing with respect to the near-infrared absorbing material particles becoming too large can be avoided. This is because it is possible to avoid formation of hydrolysis products of the metal chelate compound or metal cyclic oligomer compound, and to avoid the easy granulation of the near-infrared absorbing material particles through the polymerization of the hydrolysis product during removal of the medium after coating film formation. By suppressing granulation of the near-infrared absorbing material particles, good transparency can be ensured. Additionally, increased production costs due to increased additive amount and processing time due to excess amount of the metal chelate compound and metal cyclic oligomeric compound can be avoided. Accordingly, the additive amount of the metal chelate compound or the metal cyclic oligomer compound is preferably 1000 parts by mass or less in terms of the metal element from industrial point of view.

The film thickness of the coating film of the near-infrared absorbing material particles is not particularly limited. The film thickness is preferably, for example, 0.5 nm or more. This is because, if the film thickness of the coating film is 0.5 nm or more, the near-infrared absorbing material particles exhibit particularly excellent weather resistance and chemical stability. On the other hand, from the viewpoint of sufficiently securing the optical properties of the near-infrared absorbing material particles, the film thickness of the coating film is preferably 100 nm or less. The film thickness of the coating film is more preferably 0.5 nm or more and 20 nm or less, and further preferably 1 nm or more and 10 nm or less.

The film thickness of the coating film can be measured from transmission electron microscope images of surface-treated infrared absorbing material particles.

### (2) A Method of Manufacturing Surface-Coated Near-Infrared Absorbing Material Particles

In order to manufacture surface-coated near-infrared absorbing material particles, first, near-infrared absorbing material particles are dispersed in water or an organic solvent containing water to prepare a near-infrared absorbing material particles dispersing solution for coating film formation (hereinafter referred to as a "coating film formation dispersing solution") (preparation process of dispersing solution of coating film formation). The near-infrared absorbing material particles to be surface-coated can be manufactured according to "2. **A** Method of Manufacturing Near-Infrared Absorbing Material Particles" described later.

The surface treatment agent described in "(1) Surface Treatment Agents, Coating Film Materials, and the like" (Preparation process of surface treatment agent) is prepared.

Then, the surface treatment agent is added to the coating film forming dispersion while mixing and agitating (surface treatment agent addition process).

The coating film forming dispersing solution, the surface treatment agent, water, and other solvents can be removed by an appropriate drying process after the surface coating of the near-infrared absorbing material particles by the surface treatment agent addition process.

### (2-1) Preparation Process of Dispersing Solution for Coating Film Formation

In the preparation process of dispersing solution for the coating film formation, the preparation of the dispersing solution for the coating film formation is preferably preliminarily pulverized if necessary to disperse the near-infrared absorbing material particles in water or a suitable organic solvent containing water in a monodispersion state. The dispersion concentration of the near-infrared absorbing material particles in the dispersing solution is preferably 0.01% by mass or more and 80% by mass or less. The above-described dispersion concentration range increases the liquid stability of the dispersing solution.

In the dispersing solution prepared in the preparation process of dispersing solution for the coating film formation, it is preferable so that the near-infrared absorbing material particles are in the dispersion state and are not in agglomeration state. This is to avoid the near-infrared absorbing material particles from agglomerating and being surface-coated in an agglomerated state in the next process such as a surface treatment agent addition process, which performs surface treatment of near-infrared absorbing material particles. In addition, in order to avoid the situation where the agglomerate remains in the near-infrared absorbing material particle dispersion, which will be described later. This is to avoid a situation where the transparency of the near-infrared absorber material particle dispersion is reduced.

The specific method of crushing and dispersing near-infrared absorbing material particles in the preparation process of dispersion solution for coating film formation is not particularly limited. Examples of the methods include a pulverization and dispersion treatment method using a device such as a bead mill, a ball mill, a sand mill, a paint shaker, or an ultrasonic homogenizer. Among them, the pulverization and dispersion process are preferably performed by a media agitation mill such as a bead mill, ball mill, sand mill, paint shaker, or other media agitation mill using media such as beads, balls, or Ottawa sand, as the time required to reach the desired dispersed particle size is short.

### (2-2) Surface Treatment Agent Preparation Process

In the surface treatment agent preparation process, it is sufficient to prepare the previously described surface treatment agent, so the description is omitted here.

### (2-3) Surface Treatment Agent Addition Process

In the surface treatment agent addition process, the surface treatment agent can be added to the coating film formation dispersing solution while mixing and agitating the dispersing solution.

In the additive process of surface treatment agent, the surface of the near-infrared absorbing material particles is coated with a coating film containing one or more types selected from a hydrolysis product of a metal chelate compound, a polymer of a hydrolysis product of the metal chelate compound, a hydrolysis product of a metal cyclic oligomer compound, and a polymer of a hydrolysis product of the metal cyclic oligomer compound.

In the surface treatment agent addition process, the surface treatment agent is added while mixing and agitating the prepared coating film formation dispersing solution. At this time, it is desirable to dilute the coating film formation dispersing solution to an appropriate concentration with water or an appropriate organic solvent containing water, if necessary. Specifically, for example, it is preferable to dilute the near-infrared absorbing material particles so that the dispersion concentration of the particles is preferably 0.01% by mass or more and 20% by mass or less, and more preferably 1% by mass or more and 10% by mass or less. This is because dilution to achieve the above dispersion concentration ensures more uniform surface coating of all contained near-infrared absorbing material particles.

Hereinafter, the addition is described in the following order:
(2-3-1) A method of coating the surface of near-infrared absorbing material particles using dispersing solution for coating film formation with water as a medium, and (2-3-2) A method of coating the surface of near-infrared absorbing material particles using dispersing solution for coating film formation with water-containing organic solvent as a medium.

### (2-3-1) A method of coating the surface of near-infrared absorbing material particles using dispersing solution for coating film formation with water as a medium

The inventors of the present invention have found that in the preparation of the dispersing solution for coating film formation described above, it is preferable to add the surface treatment agent to the dispersing solution while stirring and mixing the dispersing solution for coating film formation using water as the medium, and furthermore, to immediately complete the hydrolysis reaction of the added metal chelate compound and metal cyclic oligomer compound.
The surface treating agent is preferably added dropwise from the viewpoint of uniformly covering the near-infrared absorbing material particles.

This is thought to be due to the reaction sequence of the added surface treatment agent. In the dispersing solution for forming the coating film formation in which water is used as a medium, the hydrolysis reaction of the surface treatment agent is always preceded by a polymerization reaction of the hydrolysis products produced. As a result, compared to the case where water is not used as a medium, it is thought that the amount of residual carbon (C) in the surface treatment agent molecules present in the coated film can be reduced. By reducing the amount of residual carbon (C) in the surface treatment agent molecules present in the coating film, it is believed that it is possible to form a coating film that densely coats the surface of individual near-infrared absorbing material particles.

When adding the surface treatment agent dropwise, it is also preferable to add the surface treatment agent itself diluted with an appropriate solvent dropwise in order to adjust the amount of the surface treatment agent added per hour. As a solvent used for dilution, one that does not react with the surface treatment agent concerned and is highly compatible with water, which is the medium of the dispersing solution for the coating film formation, is preferred. Specifically, alcohol-based, ketone-based, glycol-based, and other solvents can be preferably used.

The dilution factor of the surface treatment agent is not particularly limited. However, from the viewpoint of ensuring productivity, the dilution factor is preferably 100 times or less.

In the aforementioned dispersing solution for coating film formation using water as the medium, the metal chelate compound, metal cyclic oligomer compound, hydrolysis products thereof, and the polymerization of such hydrolysis products are decomposed to metal ions immediately after addition. However, the decomposition to the metal ions is completed when the solution becomes saturated.

On the other hand, in the dispersing solution for the coating film formation using water as the medium, the near-infrared absorbing material particles remain dispersed due to electrostatic repulsion.

As a result, the surface of all the near-infrared absorbing material particles is coated with a coating film containing one or more types selected from a hydrolysis product of a metal chelate compound, a polymer of a hydrolysis product of the metal chelate compound, a hydrolysis product of a metal cyclic oligomer compound, and a polymer of a hydrolysis product of the metal cyclic oligomer compound.

### (2-3-2) A method of coating the surface of near-infrared absorbing material particles using dispersing solution for coating film formation with an organic solvent containing water as a medium

As a variant of the method of coating surface of the near-infrared absorbing material particles using the above-mentioned dispersing solution for coating film formation with water as the medium, an organic solvent containing water is used as the medium of the dispersing solution for coating film formation, and the above-mentioned reaction sequence is preferably carried out while adjusting the amount of water to be added to an appropriate value.

This preparation method is suitable, for example, when it is desired to reduce the amount of water contained in the dispersing solution for coating film formation for the convenience of subsequent processes.

Specifically, the aforementioned surface treatment agent and pure water are dropped in parallel while the dispersing solution for the coating film formation, which uses an organic solvent containing water as the medium, is stirred and mixed. At this time, the medium temperature that affects the reaction rate and the dropping rate of the surface treatment agent and pure water are appropriately controlled. The organic solvent may be a solvent which dissolves in water at room temperature, such as an alcohol-based solvent, a ketone-based solvent, or a glycol-based solvent, and a variety of solvents may be selected.

When adding the surface treatment agent dropwise, it is also preferable to add the surface treatment agent itself diluted with an appropriate solvent dropwise in order to adjust the amount of the surface treatment agent added per hour. As a solvent used for dilution, one that does not react with the surface treatment agent concerned and is highly compatible with an organic solvent containing water, the medium of the dispersing solution for the coating film formation, is preferred. Specifically, alcohol-based, ketone-based, glycol-based, and other solvents can be preferably used.

The dilution factor of the surface treatment agent can be the same as that of "(2-3-1) A method of coating the surface of near-infrared absorbing material particles using dispersing solution for coating film formation with water as a medium" described above.

### (2-4) Drying Process

In the drying process, the surface treatment agent may be added to coat the near-infrared absorbing material particles, and then the solvent in the mixture of solvents such as the dispersing solution for the coating film formation, the surface treatment agent, water, and the like may be removed by the appropriate drying process.

As equipment for drying treatment, from the viewpoint that one or more operations selected from heating and decompression are possible and that surface-coated near-infrared absorbing material particles are easy to mix and collect, air dryers, universal mixers, ribbon-type mixers, vacuum flow dryers, vibratory flow dryers, freeze dryers, ribocorns, rotary kilns, spray dryers, parcon dryers, and the like are preferably used, but not limited to these.

The drying temperature in the drying process is not particularly limited. However, the drying process is preferably performed at a temperature higher than that at which the solvent in the dispersing solution is volatilized and at which the element M does not desorb even in an air atmosphere in a composite tungsten oxide containing the near-infrared absorbing material particles. For example, the drying temperature is preferably 150°C or less.

### (2-5) Heat Treatment Process

As described in "(1-3) Hydrolysis products of metal chelate compound and metal cyclic oligomer compound and polymers thereof", when the coating film of the near-infrared absorbing material particles to which the surface has been treated contains an undissolved metal chelate compound or metal cyclic oligomer compound, a decomposition of the undissolved metal chelate compound and the like by heat treatment is preferably performed. Therefore, the heat treatment process can be performed if necessary.

The conditions of the heat treatment are not particularly limited, but can be performed in an air atmosphere or in an inert gas atmosphere. The heat treatment atmosphere is preferably an inert gas atmosphere because the heat treatment is preferably performed so that the element M of the composite tungsten oxide contained in the near-infrared absorbing material particles does not desorb.

The heat treatment temperature is also not particularly limited. The temperature is equal to or more than the temperature at which the metal chelate compound or the metal cyclic oligomer compound contained in the coating film decomposes, and lower than the temperature at which the near-infrared absorbing material particles begin to crystallize. Specifically, for example, the heat treatment temperature is preferably in a temperature range of 200°C or higher and less than 500°C.

For example, by performing the heat treatment within the temperature range described above, the near-infrared absorbing material particles are not grown, and the decomposition of the undissolved metal chelate compound or the metal cyclic oligomer compound is advanced, thereby obtaining the near-infrared absorbing material particles that have undergone the surface treatment.

### 2. Method of Manufacturing Near-Infrared Absorbing Material Particles

A configuration example of a method of manufacturing near-infrared absorbing material particles will be described. According to the method of manufacturing the near-infrared absorbing material particles of the present embodiment, the near-infrared absorbing material particles described above can be manufactured. For this reason, some explanations of the matters already explained will be omitted.

The composite tungsten oxide particles represented by the foregoing general formula MₓW_{y}O_{z} contained by the near-infrared absorbing material particles of the present embodiment can be produced by, for example, the following solid phase reaction method or plasma method.

Each method will be described below.

### (1) Solid Phase Reaction Method

When composite tungsten oxide particles are manufactured by a solid phase reaction method, the following processes may be performed.

The tungsten compound and the elemental M compound are mixed to prepare a raw material mixture (mixing process). These compounds are mixed so that the mass ratio (molar ratio) of the elemental M and the tungsten in the raw material mixture becomes the ratio of x and y in the above general formula of the particles of the desired compound tungsten oxide.

The raw material mixture obtained in the mixing process is heat-treated in an atmosphere containing oxygen (the first heat treatment process).

The heat treatment product obtained after the first heat treatment process is heat treated in a reducing gas atmosphere, a mixture gas atmosphere of a reducing gas and an inert gas, or an inert gas atmosphere (second heat treatment process).

After the second heat treatment process, pulverization or the like can be performed so that the near-infrared absorbing material particles have the desired particle size if necessary.

The near-infrared absorbing material particles of the present embodiment, including the composite tungsten oxide particles obtained by the above-described processes, have sufficient near-infrared absorbing ability and are preferred properties as near-infrared absorbing material particles. In addition, the near-infrared absorbing material particles with excellent weather resistance can be obtained.

Each process is described in detail below.

### (Mixing Process)

Examples of the tungsten compounds used in the mixing process include one or more tungsten compounds selected from tungstic acid (H₂WO₄), ammonium tungstate, tungsten hexachloride, and hydrate of tungsten, which is hydrolyzed by adding water to tungsten hexachloride dissolved in alcohol and then evaporating the solvent.

In addition, one or more element M compounds selected from, for example, an oxide, a hydroxide, a nitrate, a sulfate, a chloride, and a carbonate of element M can be used for the mixing process.

In the mixing process, when mixing the tungsten compound with the element M compound, each raw material is preferably mixed so that the mass ratio (M:W) of the element M (M) and the tungsten (W) in the obtained raw material mixture of the tungsten compound and the element M compound is equal to the ratio x:y of the general formula MₓW_{y}O_{z}.

The method of mixing is not particularly limited, and either wet mixing or dry mixing can be used. In the case of wet mixing, the mixture obtained after wet mixing is dried to provide a mixed powder of the elemental M compound and the tungsten compound. The drying temperature and time after wet mixing are not particularly limited.

Dry mixing can be performed using commercially available mixing equipment such as grinders, kneaders, ball mills, sand mills, paint shakers, or the like. There are no restrictions on mixing conditions such as mixing time or mixing speed.

### (First Heat Treatment Process)

The heat treatment temperature in the first heat treatment process is not particularly limited. The temperature is preferably higher than the temperature at which the composite tungsten oxide particles crystallize. Specifically, for example, the temperature is preferably in the range of 500°C to 1000°C, and more preferably in the range of 500°C to 800°C.

### (Second Heat Treatment Process)

In the second heat treatment process, as described above, heat treatment can be performed at a temperature in the range of 500°C to 1200°C in a reducing gas atmosphere, in a mixture gas atmosphere of a reducing gas and an inert gas, or in an inert gas atmosphere.

When the reducing gas is used in the second heat treatment process, the type of the reducing gas is not particularly limited, but hydrogen (H₂) is preferably used. When hydrogen is used as the reducing gas, the concentration is not particularly limited if the concentration is appropriately selected according to the firing temperature, the amount of starting material, and the like. For example, it is 20% by volume or less, preferably 10% by volume or less, and more preferably 7% by volume or less. If the concentration of the reducing gas is 20% by volume or less, the formation of WO₂ which does not have the solar shielding function due to rapid reduction can be avoided.

### (2) Plasma Method

The composite tungsten oxide particles represented by the foregoing general formula MₓW_{y}O_{z} contained in the near-infrared absorbing material particles of the present embodiment may also be produced, for example, by plasma method. When the plasma method is used to make particles of near-infrared absorbing material, the following processes may be performed.

As the starting material, a mixture of the tungsten compound and the elemental M compound or a composite tungsten oxide precursor represented by the general formula MₓW_{y}O_{z'} is prepared (raw material preparation process).

The starting material prepared in the raw material preparation process is fed into a plasma together with a carrier gas, and the composite tungsten oxide particles of interest are formed through the evaporation and condensation process (reaction process).

### (Raw Material Preparation Process)

When preparing the raw material mixture of the tungsten compound and the element M compound as a starting material, each raw material is preferably mixed so that the mass ratio (M:W) of the element M and the tungsten (W) in the obtained raw material mixture of the tungsten compound and the element M compound is equal to the ratio x:y in the aforementioned general formula of the compound tungsten oxide of interest.

As the tungsten compound and the element M compound, a material similar to that described in the solid phase reaction method can be preferably used. Therefore, the description will be omitted here.

In the composite tungsten oxide precursor represented by the general formula MₓW_{y}O_{z'}, M is the above-mentioned element M, W is tungsten, and O is oxygen, and x, y, and z' preferably satisfy 0.001≤x/y≤1, and 2.0<z'/y.

The composite tungsten oxide precursors, represented by the general formula MₓW_{y}O_{z'}, can be synthesized, for example, by the solid phase reaction method described above. The ratio x/y in such composite tungsten oxide precursors is a material consistent with the ratio x/y in the composite tungsten oxide particles represented by the desired general formula MₓW_{y}O_{z}.

### (Reaction Process)

As the carrier gas for conveying the starting material in the reaction process, a mixture gas of an inert gas and an oxygen gas can be used.

The plasma can be generated, for example, by inert gas alone or in the mixture gas atmosphere of inert gas and hydrogen gas. The plasma is not particularly limited, but a thermal plasma is preferably used. The raw material supplied to the plasma instantaneously evaporates, and the evaporated raw material condenses during the process leading to the plasma tail flame and rapidly solidifies outside the plasma frame to produce composite tungsten oxide particles. The plasma method, for example, can produce particles of composite tungsten oxide with a single crystalline phase.

The plasma used in the method of manufacturing near-infrared absorbing material particles is preferably, for example, DC arc plasma, high-frequency plasma, microwave plasma, or low-frequency AC plasma, or a superimposition of these, or an electrical method using DC plasma with a magnetic field applied, a high-power laser, or obtained by a high-power electron beam or ion beam. Whichever thermal plasma is used, it should be a thermal plasma with a high-temperature of 10,000 K or higher, more preferably in the range of 10,000 K to 25,000 K. In particular, it should be a plasma that can control the particle generation time.

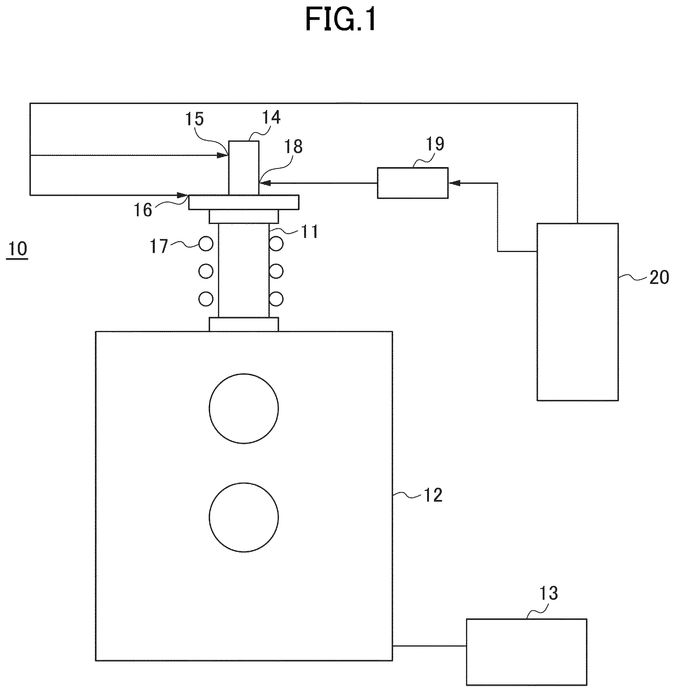

A specific configuration example of the reaction process in the method of manufacturing the near-infrared absorbing material particles according to the present embodiment by the plasma method will be described with reference to FIG. 1.

The device illustrated in FIG. 1 is a hybrid plasma reactor device 10 in which a DC plasma device and a high-frequency plasma device are superimposed.

The hybrid plasma reactor device 10 includes a water-cooled quartz double tube 11 and a reaction vessel 12 connected to the water-cooled quartz double tube 11. A vacuum exhaust device 13 is also connected to the reaction vessel 12.

A DC plasma torch 14 is provided above the water-cooled quartz double tube 11, and a gas supply port for plasma generation 15 is provided in the DC plasma torch 14.

Sheath gas for high-frequency plasma generation and quartz tube protection can be supplied along the inner wall of the water-cooled quartz double tube 11 outside the plasma region, and a sheath gas inlet 16 is provided on the upper flange of the water-cooled quartz double tube 11.

A water-cooled copper coil 17 for high-frequency plasma generation is disposed around the water-cooled quartz double tube 11.

A raw material powder carrier gas supply port 18 is provided near the DC plasma torch 14 and is connected by piping to a raw material powder supply device 19 that supplies a raw material powder.

The plasma generation gas supply port 15, the sheath gas inlet 16, and a raw material powder supply device 19 may be connected to the gas supply device 20 by pipes so that the predetermined gas can be supplied from the gas supply device 20 to each member. In addition, if necessary, a supply port other than the above-described member may be provided to cool down the member in the device or allow the member to have a predetermined atmosphere, and the gas supply device 20 may be connected thereto.

A method of manufacturing composite tungsten oxide particles using the hybrid plasma reactor device 10 will be described.

First, a vacuum exhaust device 13 draws a vacuum into the reaction system constituting the water-cooled quartz double tube 11 and the reaction vessel 12. In this case, the degree of vacuum is not particularly limited, but, for example, the vacuum can be pulled to about 0.1 Pa (about 0.001 Torr). After vacuum through the reaction system, argon gas can be supplied from the gas supply device 20 and filled into the reaction system. For example, it is preferable to use an argon gas distribution system with 1 atm pressure in the reaction system.

The plasma gas can then be supplied into the reaction vessel 12. The plasma gas is not particularly limited, but any gas selected from, for example, argon gas, a gas mixture of argon and helium (Ar-He mixture gas), a gas mixture of argon and nitrogen (Ar-N₂ mixture gas), neon, helium, and xenon can be used.

The supply flow rate of the plasma gas is not particularly limited. The plasma gas may be introduced from the plasma generation gas supply port 15, for example, preferably at a flow rate of 3 L/min or more and 30 L/min or less, and more preferably at a flow rate of 3 L/min or more and 15 L/min or less. The DC plasma can then be generated.

On the other hand, sheath gas for high-frequency plasma generation and quartz tube protection can be pivotally supplied from the sheath gas inlet 16 along the inner wall of the water-cooled quartz double tube 11 outside the plasma region. The type of sheath gas and the supply rate are not particularly limited. For example, argon gas of 20 L/min or more and 50 L/min or less and hydrogen gas of 1 L/min or more and 5 L/min or less are flowed to generate high-frequency plasma.

A high frequency power supply can then be applied to the water-cooled copper coil 17 for high frequency plasma generation. The conditions of the high-frequency power supply are not particularly limited. However, for example, a high-frequency power supply having a frequency of about 4 MHz can be added at a frequency in the range of 15 kW to 50 kW.

After such a hybrid plasma is generated, the raw material may be introduced from the raw material powder carrier gas supply port 18 by the raw material powder supply device 19 using a carrier gas. The carrier gas is also not particularly limited. For example, a mixture of argon gas of 1 L/min or more and 8 L/min or less and oxygen gas of 0.001 L/min or more and 0.8 L/min or less may be used.

The reaction is carried out by introducing the raw material mixture or the composite tungsten oxide precursor as a starting material into the plasma. The supply rate from the raw material powder carrier gas supply port 18 of the starting material is not particularly limited. However, the supply rate is preferably, for example, in the range of 1 g/min to 50 g/min, and more preferably in the range of 1 g/min to 20 g/min.

By setting the supply rate of the starting material to 50 g/min or less, the ratio of starting material passing through the center of the plasma flame is sufficiently high, the ratio of unreacted materials and intermediate products is suppressed, and the desired composite tungsten oxide particle formation ratio can be high. In addition, productivity can also be increased by setting the supply rate of the starting material to 1 g/min or higher.

The starting material supplied into the plasma instantaneously evaporates in the plasma and undergoes a condensation process to produce composite tungsten oxide particles with an average primary particle size of 100 nm or less.

The particle size of the composite tungsten oxide particles obtained by the method of manufacturing according to the present embodiment can be easily controlled by the plasma output, the plasma flow rate, and the amount of the raw material powder supplied.

After the reaction, the composite tungsten oxide particles formed are deposited in the reaction vessel 12 and can be recovered.

The surface of the near-infrared absorbing material particles obtained by the manufacturing method described above may be coated with a coating film. Since the method of forming the coating film has already been described, the description will be omitted here.

The method of manufacturing of the near-infrared absorbing material particles according to the present embodiment has been described above. The near-infrared absorbing material particles obtained by the manufacturing method can be evaluated and confirmed by, for example, the following method.

For example, chemical quantitative analysis of the constituent elements of near-infrared absorbing material particles obtained by the method of manufacturing the near-infrared absorbing material particles can be performed. The analytical method is not particularly limited, but for example, elemental M or tungsten can be analyzed by plasma emission spectroscopy, and oxygen can be analyzed by inert gas impulse heated fused infrared absorption.

In addition, the crystal structure of the composite tungsten oxide particles contained in the near-infrared absorbing material particles can be confirmed by the powder X-ray diffraction method.

The particle size of near-infrared absorbing material particles can be confirmed by TEM observation and particle size measurement based on dynamic light scattering.

### 3. Near-Infrared Absorbing Material Particle Dispersing Solution

The near-infrared absorbing material particle dispersing solution according to the present embodiment can include the near-infrared absorbing material particles described above and the dispersion medium.

The near-infrared absorbing material particles are preferably dispersed in a dispersion medium.

The near-infrared absorbing material particle dispersing solution according to the present embodiment is obtained by mixing and dispersing the above-mentioned near-infrared absorbing material particles containing the composite tungsten oxide particles in an appropriate dispersion medium (solvent).

The type of dispersion medium used in the near-infrared absorbing material particle dispersing solution of the present embodiment is not particularly limited. For example, the dispersion medium can be selected according to the conditions, environment, or the like when the dispersing solution is applied or kneaded into other materials. Further, when the near-infrared absorbing material particle dispersing solution of the present embodiment further contains other components such as an inorganic binder and a binder such as a resin binder, a dispersion medium may be added in a combination with the other components such as a binder or the like.

As the dispersion medium, one or more of dispersion medium can be selected from a water solution such as water; alcohols such as ethanol, propanol, butanol, isopropyl alcohol, isobutyl alcohol, diacetone alcohol, and the like; ethers such as methyl ether, ethyl ether, propyl ether, and the like; esters and the like; ketones such as acetone, methyl ethyl ketone, diethyl ketone, cyclohexanone, isobutyl ketone, methyl isobutyl ketone, and the like; aromatic hydrocarbons such as toluene and the like; or can be selected from a variety of organic solvents.

The dispersion medium may use resin monomers or oligomers.

The content ratio of the dispersion medium in the near-infrared absorbing material particles dispersing solution is not particularly limited. However, the content ratio of the dispersion medium is preferably 80 parts by mass to 100 parts by mass of the near-infrared absorbing material particles. When the content ratio of the dispersion medium is 80 parts by mass to 100 parts by mass of the near-infrared absorbing material particles, the preservation of the dispersing solution can be secured, and workability can be ensured when preparing near-infrared absorbing material particle dispersion.

The near-infrared absorbing material particle dispersing solution according to the present embodiment can contain any component other than the near-infrared absorbing material particles and the dispersion medium.

For example, in the case where water is used as the dispersing solution, an acid or alkali may be added to the near-infrared absorbing material particle dispersing solution of the present embodiment to adjust the pH of the dispersing solution.

Meanwhile, in order to further improve the dispersion stability of the near-infrared absorbing material particles in the dispersing solution, the near-infrared absorbing material particles dispersing solution of the present embodiment may further contain various dispersing agents, surfactants, coupling agents, and the like.

The method of dispersing the near-infrared absorbing material particles into the dispersion medium is not particularly limited. For example, the method of uniformly dispersing the near-infrared absorbing material particles into the dispersion medium is preferably adopted, and the particle size of the near-infrared absorbing material particles can be adjusted.
Specifically, the method is preferably capable of uniformly dispersing the near-infrared absorbing material particles in the dispersion medium, and the method is preferably capable of adjusting the particle size of the near-infrared absorbing material particles to 100 nm or less, more preferably in the range of 10 nm to 100 nm, further preferably in the range of 10 nm to 80 nm, particularly preferably in the range of 10 nm to 60 nm, and most preferably in the range of 10 nm to 40 nm. If the near-infrared absorbing material particles are sufficiently micronized in the near-infrared absorbing material particle dispersing solution, the crystallite size of the composite tungsten oxide particles contained in the near-infrared absorbing material particles will be almost equal to the size of the near-infrared absorbing material particles.

Methods of dispersing near-infrared absorbing material particles in the dispersion medium include, for example, one or more dispersing methods selected from a bead mill, a ball mill, a sand mill, a paint shaker, an ultrasonic homogenizer, or the like.

The mechanical dispersion process using these instruments disperses the near-infrared absorbing material particles in the dispersion medium and at the same time miniaturizes them by collisions between the near-infrared absorbing material particles.

The state of the near-infrared absorbing material particles dispersing solution of the present embodiment can be confirmed by measuring the dispersion state of the near-infrared absorbing material particles when the near-infrared absorbing material particles are dispersed in the dispersion medium. For example, the near-infrared absorbing material particles of the present embodiment can be identified by sampling the sample from a liquid existing as an agglomeration of particles and particles in a dispersing medium and measuring the sample with various commercially available particle size analyzers. As particle size analyzers, for example, a known measuring device such as an ELS-8000 or the like manufactured by Otsuka Electronics Co., Ltd. based on a dynamic light scattering method can be used.

The dispersed particle size of the near-infrared absorbing material particles is preferably 800 nm or less, more preferably 200 nm or less, and further preferably 100 nm or less from the viewpoint of the optical properties.

The lower limit of the dispersed particle size of the near-infrared absorbing material is not particularly limited, but preferably, for example, 10 nm or more.

The near-infrared absorbing material particles are preferably uniformly dispersed in the dispersion medium.

If the dispersed particle size of near-infrared absorbing material particles is 800 nm or less, the near-infrared absorbing films (near-infrared shielding films) and molded bodies (plates, sheets, and the like) produced using the near-infrared absorbing material particle dispersing solutions can avoid becoming grayish with monotonously decreased transmittance.

The dispersed particle size refers to the particle size of a single particle of the near-infrared absorbing material particles dispersed in the dispersing solution of the near-infrared absorbing material particles or of agglomerated particles in which the near-infrared absorbing material particles are agglomerated.

In the near-infrared absorbing material particle dispersing solution, the particles of the near-infrared absorbing material particles agglomerate to form a coarse agglomerate, and if a large number of the coarse particles exist, the coarse particles become a light scattering source. As a result, when the near-infrared absorbing material particle dispersion such as a near-infrared absorbing film or a molded body is fabricated using the near-infrared absorbing material particle dispersing solution, cloudiness (haze) may increase and cause a decrease in visible light transmittance. Therefore, it is preferable to disperse sufficiently to avoid the generation of coarse particles of near-infrared absorbing material particles.

### 4. Near-Infrared Absorbing Material Particle Dispersion

The near-infrared absorbing material particle dispersion of the present embodiment can include the near-infrared absorbing material particles described above and a solid medium. The near-infrared absorbing material particles are preferably dispersed in a solid medium.

The near-infrared absorbing material particle dispersion of the present embodiment is obtained by dispersing the near-infrared absorbing material particles described above in a suitable solid medium.

The near-infrared absorbing material particle dispersion in the present embodiment maintains the dispersion state by dispersing, for example, the near-infrared absorbing material particles in the solid medium such as a resin after mechanical milling under predetermined conditions. Therefore, the near-infrared absorbing material particle dispersion can be applied to a substrate material having a low heat-resistant temperature, such as a resin material or the like, and have the advantage of being inexpensive and not requiring large equipment for formation.

The near-infrared absorbing material according of the present embodiment is a conductive material. Therefore, when the near-infrared absorbing material is used as a continuous film, there may be a concern of absorbing and reflecting radio waves of a mobile phone or the like, thereby interfering with the radio waves. However, when the near-infrared absorbing material is dispersed as particles in the matrix of a solid medium, each particle is dispersed in isolation and can exhibit radio wave transmittance, thereby obtaining versatility.

The average particle size of the near-infrared absorbing material particles dispersed in the matrix of the solid medium of the near-infrared absorbing material particle dispersion and the dispersed particle size of the near-infrared absorbing material particles that are dispersed in the near-infrared absorbing material particle dispersing solution used to form the near-infrared absorbing material particle dispersion or in the dispersing solution of forming the near-infrared absorbing material particle dispersion may be different. This is because when obtaining the near-infrared absorbing material particle dispersion from the dispersing solution of forming the near-infrared absorbing material particle dispersing solution or the dispersing solution for forming the near-infrared absorbing material particle dispersion, the agglomeration of the near-infrared absorbing material particles that had agglomerated in the dispersing solution is dissolved.

For example, a resin or glass may be used, although not particularly limited as a solid medium for the near-infrared absorbing material particle dispersion.

When a resin is used as the solid medium, the type of resin is not particularly limited. However, the resin may be one or more types selected from, for example, polyethylene terephthalate resin, polycarbonate resin, acrylic resin, polystyrene resin, polyamide resin, polyethylene resin, vinyl chloride resin, polyvinyl butyral resin, polyester resin, olefin resin, epoxy resin, polyimide resin, fluorine resin, ethylene-vinyl acetate copolymer resin, and polyvinyl acetal resin.

Although the content ratio of the near-infrared absorbing material particles of the near-infrared absorbing material particle dispersion is not particularly limited, the near-infrared absorbing material particle dispersion preferably contains the near-infrared absorbing material particles at a ratio of from 0.001% by mass to 80% by mass or less. This is because the near-infrared absorbing material particles contain 0.001% by mass or more, thereby providing sufficient near-infrared shielding. Further, since the ratio of the near-infrared absorbing material particles is adjusted to 80% by mass or less, the ratio of the solid medium contained in the near-infrared absorbing material particle dispersion can be increased, and the strength of the dispersion can be increased.

The shape or the like of the near-infrared absorbing material particle dispersion of the present embodiment is not particularly limited, and can be arbitrarily selected depending on the application or the like. For example, the near-infrared absorbing material particle dispersion in the present embodiment is preferably in the form of a sheet, a board, or a film.

The method of manufacturing the near-infrared absorbing material particle dispersion according to the present embodiment is not particularly limited. The near-infrared absorbing material particle described above is added to a solid medium and dispersed as needed.

The near-infrared absorbing material particle dispersion according to the present embodiment can be prepared, for example, by the following procedure.

First, the dispersing solution for forming the near-infrared absorbing material particles can be prepared. The dispersing solution for forming the near-infrared absorbing material particles can be prepared by adding and dissolving a resin serving as a solid medium, for example, to the near-infrared absorbing material particle dispersing solution. In addition, one or more kinds selected from a silane coupling agent, a silane-based alkoxide, a polysilazane, and a polyorganosilane, which are precursors of a silicate compound or the like, serving as a glass, can be added to the near-infrared absorbing material particles dispersing solution.

The prepared dispersing solution for forming the near-infrared absorbing material particle dispersion is applied to a transparent substrate such as a glass plate or a plate-shaped plastic. Subsequently, the dispersing medium of the near-infrared absorbing material particle dispersing solution contained in the dispersing solution for forming the near-infrared absorbing material particle dispersion can be dried, volatilized, or the like to obtain a near-infrared absorbing transparent substrate in which a cured near-infrared absorbing material particle dispersion is formed on the surface of the transparent substrate.

In addition, the near-infrared absorbing material particles and the near-infrared absorbing material particle dispersing solution can be mixed into a solid medium to obtain the near-infrared absorbing material particle dispersion.

### EXAMPLES

Although the invention will be described in more detail below with reference to examples, the invention is not limited thereto.

### [Example 1]

23.5 g of Cs₂CO₃ was dissolved in 36 g of water, and this mixture was added to 109 g of H₂WO₄ and sufficiently stirred, then dried to obtain the raw material mixture in Example 1 (raw material preparation process).

Next, the reaction process was performed using a hybrid plasma reactor device 10 in which the DC plasma and the high-frequency plasma illustrated in FIG. 1 were superimposed, using the raw material mixture prepared in the raw material preparation process.

First, the inside of the reaction system was vacuumed to about 0.1 Pa (about 0.001 torr) by the vacuum exhaust device 13, and then the atmosphere of the reaction system was completely replaced with argon gas to be an argon gas distribution system with 1 atm pressure.

Argon gas was flowed at 8 L/min from plasma generation gas supply port 15 to generate DC plasma. The DC power input was 6 kW.

Along the inner wall of the water-cooled quartz double tube 11, the argon gas and the hydrogen gas were spirally flowed at 40 L/min and 3 L/min, respectively from the sheath gas inlet 16 as gases for high-frequency plasma generation and for protection of the quartz tube, and the high-frequency plasma was generated.

At this time, the high frequency power supply input was 45 kW. After such a hybrid plasma was generated, the raw material mixture in Example 1 was fed to the plasma at a supply rate of 2 g/min from the raw material powder supply device 19 using a mixture of argon gas at 3 L/min and oxygen gas at 0.01 L/min as a carrier gas.

As a result, the raw material instantaneously evaporated and condensed and granulated in the plasma tail flame. At the bottom of the reaction vessel 12, particles (cesium tungsten oxide particles a), which are near-infrared absorbing material particles, were collected.

The size of collected cesium tungsten oxide particle a was determined by TEM observation, and it was confirmed that the particle size of the 30 particles evaluated was in the range of 10 nm to 50 nm. The diameter of the smallest circle adjacent to the particle to be evaluated was used as the particle size of the particle.

As a result of quantitative analysis of Cs, W, and O for the collected cesium tungsten oxide particles a, it was confirmed that the contents of Cs, W, and O were 14.7 wt%, 65.5 wt%, and 18.3 wt%, respectively as indicated in Table 1. The chemical formula calculated from the above quantitative analysis was Cs_{0.31}WO_{3.21}.

Cs was evaluated using a flame atomic absorption device (model: SpectrAA 220FS, manufactured by VARIAN Inc.). W was evaluated by ICP emission spectrometry (model: ICPE9000, manufactured by Shimadzu Corporation). O was evaluated using a simultaneous Oxygen/Nitrogen element analyzer (model: ON836, manufactured by LECO). Hereinafter, the same applies to other Examples and Comparative Examples.

X-ray diffraction patterns of cesium tungsten oxide particles a were measured by the powder X-ray diffraction method (θ-2θ method) using a powder X-ray diffraction device (X'Pert-PRO/MPD manufactured by PANalytical, Spectrum Co., Ltd.). When the crystal structure of the compound contained in the cesium tungsten oxide particle a was determined from the X-ray diffraction pattern obtained, the same peak as the hexagonal crystal Cs_{0.3}WO₃ was confirmed. As noted above, the X-ray diffraction pattern allows the crystal structure of the resulting composite tungsten oxide to be determined. In this example, the crystal structure of the compound contained in the particles of the composite tungsten oxide as described above is consistent with the peak of a similar hexagonal composite tungsten oxide. Therefore, it can be confirmed that the crystal structure of the composite tungsten oxide, that is, the cesium tungsten oxide, obtained in the present embodiment is hexagonal.

A near-infrared absorbing material particle dispersing solution (A-1 solution) was prepared by weighing 20.0% by mass of the cesium tungsten oxide particles a, 16.0% by mass of the acrylic polymer dispersant having an amine group as a functional group (an acrylic dispersant having 48 mgKOH/g of amine and a decomposition temperature of 250°C) (hereinafter referred to as "dispersant a"), and 64.0% by mass of methyl isobutyl ketone as a dispersion medium, and loading them into a paint shaker (manufactured by Asada Iron Co., Ltd.) containing 0.3 mm φ of ZrO₂ beads, and crushing and dispersing them for 50 minutes.

Here, the dispersed particle size of the cesium tungsten oxide particles a in the near-infrared absorbing material particle dispersing solution (A-1 solution) was 50 nm when measured by a particle size measuring device (ELS-8000, manufactured by Otsuka Electronics Co., Ltd.) based on the dynamic light scattering method.

In addition, the dispersion medium was removed from the near-infrared absorbing material particles dispersing solution (A-1 solution), and the collected near-infrared absorbing material particles were measured by a powder X-ray diffraction device (X'Pert-PRO/MPD, manufactured by PANalytical, Spectrum Co., Ltd.), and the crystallite size was determined by the Rietvelt method from the X-ray diffraction pattern. The crystallite size was 25.0 nm. The lattice constant determined by the Rietvelt method was 7.4099 Å on the a-axis and 7.6090 Å on the c-axis. Crystallite sizes and lattice constants were determined by the Rietvelt method in the following other Examples and Comparative Examples.

Next, the obtained near-infrared absorbing material particle dispersing solution (A-1 solution) and UV curing resin (Aronics UV-3701, manufactured by Toa Gosei Co., Ltd)) were weighed at a ratio of 1:9 by weight, mixed and agitated to prepare a dispersing solution for forming the near-infrared absorbing material particle dispersion (AA-1 solution).

Then, the dispersing solution for forming the near-infrared absorbing material particles (AA-1 solution) was applied to a soda lime glass substrate having a thickness of 3 mm using a bar coater of Bar No. 16, and then the dispersing solution was dried at 70°C for 1 minute. Then, a high-pressure mercury lamp was irradiated to obtain a near-infrared absorber A, which is the near-infrared absorbing material particle dispersion in Example 1.

Here, the optical properties of the near-infrared absorber A were measured. As a result, the visible light transmittance was 69.7% and the solar radiation transmittance was 47.0%.

The optical properties were measured using a spectrophotometer U-4000 manufactured by Hitachi, Ltd. The following other optical properties were also measured by the same photometer. Visible light transmittance and solar radiation transmittance were calculated in accordance with JIS R 3106 (2019).

After conducting a heat resistance test in which the near-infrared absorber A was exposed at 120°C for 125 hr in an air atmosphere, the visible light transmittance and solar radiation transmittance were measured. As a result, the solar radiation transmittance after the exposure was 45.7%, and the change in solar radiation transmittance ΔST before and after heating at 120°C (solar radiation transmittance after exposure - solar radiation transmittance before exposure) was -1.3%, indicating excellent heat resistance.

In addition, a bar coater of Bar No. 22 was used to apply the dispersing solution (AA-1 solution) for forming the near-infrared absorbing material particle dispersion on a PET film substrate having a thickness of 0.05 mm, and then dried at 70°C for 1 minute. Then, the high-pressure mercury lamp was irradiated to obtain a near-infrared absorber B, which is the near-infrared absorbing material particle dispersion in Example 1.

The optical properties of the near-infrared absorber B were measured. As a result, the visible light transmittance was 70.3% and the solar radiation transmittance was 49.6%.

After conducting a humidity and heat resistance test in which the near-infrared absorber B was exposed at 85°C and 90% RH for 94 hours in an air atmosphere, the visible light transmittance and solar radiation transmittance were measured. As a result, the solar radiation transmittance was 49.3%, and the change in solar radiation transmittance ΔST before and after the test was - 0.3%, indicating excellent humidity and heat resistance.

Hereinafter, the same tests and evaluations as in Example 1 were conducted in Examples 2 to 21 and Comparative Examples 1 to 2. The results are indicated in Tables 1 and 2.

**[Table 1]**

| | Result of quantitative analysis (wt%) | | | Formula MₓW_{y}O_{z} | | |
|---|---|---|---|---|---|---|
| | Concentration of element M | Concentration of W | Concentration of O | x | y | z |
| Example 1 | 14.7 | 65.5 | 18.3 | 0.31 | 1.00 | 3.21 |
| Example 2 | 14.7 | 65.5 | 18.3 | 0.31 | 1.00 | 3.20 |
| Example 3 | 0.9 | 76.6 | 21.0 | 0.31 | 1.00 | 3.16 |
| Example 4 | 1.0 | 76.3 | 21.2 | 0.10 | 1.00 | 3.19 |
| Example 5 | 4.2 | 74.1 | 20.2 | 0.27 | 1.00 | 3.14 |
| Example 6 | 9.8 | 69.6 | 19.1 | 0.30 | 1.00 | 3.16 |
| Example 7 | 5.0 | 73.4 | 20.1 | 0.20 | 1.00 | 3.14 |
| Example 8 | 0.6 | 76.8 | 21.1 | 0.01 | 1.00 | 3.16 |
| Example 9 | 1.5 | 76.2 | 20.8 | 0.09 | 1.00 | 3.14 |
| Example 10 | 0.3 | 77.0 | 21.2 | 0.01 | 1.00 | 3.16 |
| Example 11 | 7.6 | 71.4 | 19.5 | 0.14 | 1.00 | 3.14 |
| Example 12 | 0.9 | 76.5 | 21.1 | 0.02 | 1.00 | 3.18 |
| Example 13 | 13.8 | 66.3 | 18.4 | 0.19 | 1.00 | 3.19 |
| Example 14 | 8.8 | 70.4 | 19.3 | 0.19 | 1.00 | 3.16 |
| Example 15 | 11.6 | 68.1 | 18.7 | 0.18 | 1.00 | 3.16 |
| Example 16 | 0.5 | 77.0 | 21.0 | 0.04 | 1.00 | 3.14 |
| Example 17 | 14.0 | 66.1 | 17.4 | 0.29 | 1.00 | 3.03 |
| Example 18 | 14.1 | 65.8 | 17.9 | 0.30 | 1.00 | 3.13 |
| Example 19 | 14.2 | 65.1 | 17.3 | 0.30 | 1.00 | 3.05 |
| Example 20 | 14.6 | 65.4 | 17.4 | 0.31 | 1.00 | 3.06 |
| Comparative Example 1 | 14.8 | 67.0 | 16.7 | 0.31 | 1.00 | 2.86 |
| Comparative Example 2 | 15.6 | 66.8 | 15.4 | 0.32 | 1.00 | 2.65 |

**[Table 2]**

| | Evaluation of heat resistance (120°C, 125 hr) | | | | | Evaluation of humidity and heat resistance (85°C, 90%RH, 94 hr) | | | | |
|---|---|---|---|---|---|---|---|---|---|---|
| | Before exposure (%) | | After exposure (%) | | Before and after the exposure (%) | Before exposure (%) | | After exposure (%) | | Before and after the exposure (%) |
| | Visible light transmittance | Solar radiation transmittance | Visible light transmittance | Solar radiation transmittance | ΔST | Visible light transmittance | Solar radiation transmittance | Visible light transmittance | Solar radiation transmittance | ΔST |
| Example 1 | 69.7 | 47.0 | 69.2 | 45.7 | -1.3 | 70.3 | 49.6 | 70.2 | 49.3 | -0.3 |
| Example 2 | 70.1 | 47.2 | 69.8 | 46.2 | -1.0 | 70.0 | 49.5 | 70.0 | 49.3 | -0.2 |
| Example 3 | 69.6 | 48.6 | 69.0 | 47.8 | -0.8 | 70.1 | 50.3 | 69.9 | 50.0 | -0.3 |
| Example 4 | 69.7 | 48.2 | 69.1 | 47.6 | -0.6 | 70.5 | 50.4 | 70.1 | 50.6 | 0.2 |
| Example 5 | 69.8 | 48.5 | 69.6 | 47.9 | -0.6 | 69.9 | 50.2 | 69.7 | 49.9 | -0.3 |
| Example 6 | 69.9 | 47.6 | 69.3 | 47.1 | -0.5 | 70.2 | 50.3 | 70.0 | 50.4 | 0.1 |
| Example 7 | 70.1 | 49.9 | 69.8 | 49.1 | -0.8 | 70.0 | 50.6 | 70.1 | 50.1 | -0.5 |
| Example 8 | 70.2 | 48.8 | 69.8 | 47.9 | -0.9 | 69.8 | 50.2 | 69.7 | 50.4 | 0.2 |
| Example 9 | 69.9 | 47.9 | 70.1 | 47.0 | -0.9 | 69.8 | 50.4 | 69.5 | 49.8 | -0.6 |
| Example 10 | 69.7 | 49.5 | 69.9 | 48.8 | -0.7 | 70.3 | 51.1 | 70.0 | 50.8 | -0.3 |
| Example 11 | 70.2 | 48.7 | 69.6 | 48.0 | -0.7 | 69.7 | 50.3 | 69.8 | 50.6 | 0.3 |
| Example 12 | 70.0 | 48.2 | 69.8 | 47.1 | -1.1 | 69.8 | 50.2 | 69.7 | 50.5 | 0.3 |
| Example 13 | 70.1 | 49.3 | 70.2 | 48.4 | -0.9 | 70.2 | 50.6 | 70.2 | 50.2 | -0.4 |
| Example 14 | 70.2 | 48.5 | 69.7 | 47.6 | -0.9 | 70.1 | 50.1 | 69.9 | 50.3 | 0.2 |
| Example 15 | 69.6 | 49.2 | 70.1 | 48.2 | -1.0 | 70.3 | 50.7 | 70.0 | 50.3 | -0.4 |
| Example 16 | 69.5 | 49.0 | 69.8 | 47.8 | -1.2 | 69.8 | 50.8 | 69.6 | 50.6 | -0.2 |
| Example 17 | 77.7 | 46.3 | 77.5 | 45.7 | -0.6 | 78.0 | 49.7 | 78.5 | 49.8 | 0.1 |
| Example 18 | 78.3 | 46.6 | 76.1 | 42.7 | -3.9 | 78.3 | 49.0 | 78.0 | 48.7 | -0.9 |
| Example 19 | 76.9 | 49.3 | 75.8 | 46.3 | -3.0 | 76.5 | 51.3 | 77.1 | 50.5 | -0.8 |
| Example 20 | 76.7 | 48.0 | 75.6 | 45.7 | -2.3 | 77.4 | 52.6 | 78.0 | 51.8 | -0.8 |
| Example 21 | 77.2 | 49.9 | 76.3 | 46.4 | -3.5 | 76.9 | 45.3 | 76.3 | 45.0 | -0.3 |
| Comparative Example 1 | 69.9 | 43.9 | 70.3 | 44.5 | 0.6 | 70.1 | 46.2 | 70.8 | 48.0 | 1.8 |
| Comparative Example 2 | 69.7 | 45.9 | 70.7 | 48.3 | 2.4 | 69.8 | 44.4 | 70.8 | 47.1 | 2.7 |

### [Example 2]

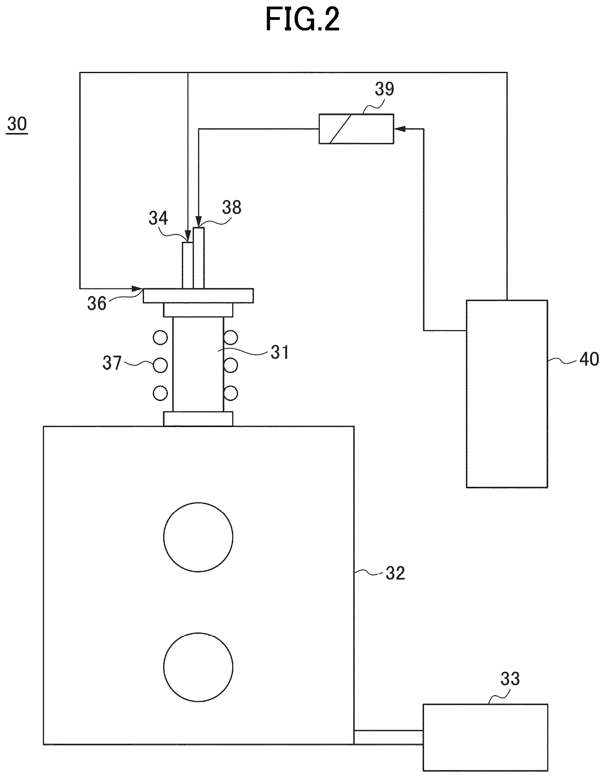

Near-infrared absorbing material particles were prepared using the high-frequency plasma reactor device 30 illustrated in FIG. 2.

The high-frequency plasma reactor device 30 includes a water-cooled quartz double tube 31 and a reaction vessel 32 connected to the water-cooled quartz double tube 31. A vacuum exhaust device 33 is connected to the reaction vessel 32.

A plasma generation gas supply port 34 is provided above the water-cooled quartz double tube 31.

The high-frequency plasma reactor device is configured to supply the sheath gas for high-frequency plasma generation and quartz tube protection along the inner wall of the water-cooled quartz double tube 31, and a sheath gas inlet 36 is provided on the flange above the water-cooled quartz double tube 31.

A water-cooled copper coil for high-frequency plasma generation 37 is provided around the water-cooled quartz double tube 31.

A raw material powder carrier gas supply port 38 is provided near the plasma generation gas supply port 34 and is connected by a pipe to the raw material powder supply device 39 for feeding the raw material powder.

The plasma generation gas supply port 34, the sheath gas inlet 36, and the raw material powder supply device 39 may be connected to the gas supply device 40 by pipes so that the predetermined gas can be supplied from the gas supply device 40 to each member. In addition, if necessary, a supply port other than the above-described member may be provided to cool down the member in the device or allow the member to have a predetermined atmosphere, and the gas supply device 40 may be connected thereto.

In the present embodiment, argon gas at 30L/min was flowed from the plasma generation gas supply port 34, and the argon gas and the hydrogen gas were spirally mixed and supplied at 40 L/min and 3 L/min, respectively from the sheath gas inlet 36 to generate high-frequency plasma. At this time, the high frequency power supply input was 45 kW.

Next, the raw material mixture prepared in Example 1 was fed to the plasma at a supply rate of 2 g/min from the raw material powder supply device 39 using a mixture gas of argon gas at 3 L/min and oxygen gas at 0.01 L/min as a carrier gas.

As a result, the particle size of the near-infrared absorbing material particles collected at the bottom of the reaction vessel 32 was in the range of 10 nm to 50 nm according to the TEM observation.

The X-ray diffraction pattern of the near-infrared absorbing material particles obtained in Example 2 was measured by the powder X-ray diffraction method (θ-2θ method). When the crystal structure of the particles was determined from the X-ray diffraction pattern obtained, the same peak as the hexagonal crystal Cs_{0.3}WO₃ was confirmed.

The near-infrared absorbing material particle dispersing solution and the near-infrared absorbing material particle dispersion were prepared and evaluated in the same manner as Example 1, except that the near-infrared absorbing material particles in Example 2 were used. In addition, the dispersion medium was removed from the near-infrared absorbing material particle dispersing solution, and the crystal size of the composite tungsten oxide particles, which are the near-infrared absorbing material particles collected from the dispersing solution, was 25.2 nm, and the lattice constant was 7.4146 Å on the a-axis and 7.5995 Å on the c-axis.

The results are indicated in Tables 1 and 2.

### [Example 3]

6.65 g of Li₂CO₃ was dissolved in 50 g of water, and this mixture was added to 150 g of H₂WO₄ and sufficiently stirred, then dried to obtain the raw material mixture in Example 3.

The powder of Li_{0.31}WO_{3.16} particles, which is the near-infrared absorbing material particles of Example 3, was obtained in the same manner as Example 2 except that the raw material mixture of Example 3 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 3 was measured by the powder X-ray diffraction method (θ-2θ method). When the crystal structure of the particles was determined from the X-ray diffraction pattern obtained, the same peak as the cubic crystal Li_{0.3}WO₃ was confirmed.

The near-infrared absorbing material particle dispersing solution and the near-infrared absorbing material particle dispersion were prepared and evaluated in the same manner as Example 1, except that the near-infrared absorbing material particles in Example 3 were used. In addition, the dispersion medium was removed from the near-infrared absorbing material particle dispersing solution, and the crystal size of the composite tungsten oxide particles, which are the near-infrared absorbing material particles collected from the dispersing solution, was 24.9 nm.

The results are indicated in Tables 1 and 2.

### [Example 4]

2.74 g of Na₂CO₃ was dissolved in 43 g of water, and this mixture was added to 130 g of H₂WO₄ and sufficiently stirred, then dried to obtain the raw material mixture in Example 4.

The powder of Na_{0.1}WO_{3.19} particles, which is the near-infrared absorbing material particles of Example 4, was obtained in the same manner as Example 2 except that the raw material mixture of Example 4 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 4 was measured by the powder X-ray diffraction method (θ-2θ method). When the crystal structure of the particles was determined from the X-ray diffraction pattern obtained, the same peak as the tetragonal crystal Na_{0.1}WO₃ was confirmed.

The near-infrared absorbing material particle dispersing solution and the near-infrared absorbing material particle dispersion were prepared and evaluated in the same manner as Example 1, except that the near-infrared absorbing material particles in Example 4 were used. In addition, the dispersion medium was removed from the near-infrared absorbing material particle dispersing solution, and the crystal size of the composite tungsten oxide particles, which are the near-infrared absorbing material particles collected from the dispersing solution, was 25.5 nm.

The results are indicated in Tables 1 and 2.

### [Example 5]

13.43 g of K₂CO₃ was dissolved in 59 g of water, and this mixture was added to 180 g of H₂WO₄ and sufficiently stirred, then dried to obtain the raw material mixture in Example 5.

The powder of K_{0.27}WO_{3.14} particles, which is the near-infrared absorbing material particles of Example 5, was obtained in the same manner as Example 2 except that the raw material mixture of Example 5 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 5 was measured by the powder X-ray diffraction method (θ-2θ method). When the crystal structure of the particles was determined from the X-ray diffraction pattern obtained, the same peak as the hexagonal crystal K_{0.27}WO₃ was confirmed.

The near-infrared absorbing material particle dispersing solution and the near-infrared absorbing material particle dispersion were prepared and evaluated in the same manner as Example 1, except that the near-infrared absorbing material particles in Example 5 were used. In addition, the dispersion medium was removed from the near-infrared absorbing material particle dispersing solution, and the crystal size of the composite tungsten oxide particles, which are the near-infrared absorbing material particles collected from the dispersing solution, was 24.4 nm.

The results are indicated in Tables 1 and 2.

### [Example 6]

22.17 g of Rb₂CO₃ was dissolved in 50 g of water, and this mixture was added to 150 g of H₂WO₄ and sufficiently stirred, then dried to obtain the raw material mixture in Example 6.

The powder of Rb_{0.3}WO_{3.16} particles, which is the near-infrared absorbing material particles of Example 6, was obtained in the same manner as Example 2 except that the raw material mixture of Example 6 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 6 was measured by the powder X-ray diffraction method (θ-2θ method). When the crystal structure of the particles was determined from the X-ray diffraction pattern obtained, the same peak as the hexagonal crystal Rb_{0.3}WO₃ was confirmed.

The near-infrared absorbing material particle dispersing solution and the near-infrared absorbing material particle dispersion were prepared and evaluated in the same manner as Example 1, except that the near-infrared absorbing material particles in Example 6 were used. In addition, the dispersion medium was removed from the near-infrared absorbing material particle dispersing solution, and the crystal size of the composite tungsten oxide particles, which are the near-infrared absorbing material particles collected from the dispersing solution, was 23.9 nm, and the lattice constant was 7.3958 Å on the a-axis and 7.5605 Å on the c-axis.

The results are indicated in Tables 1 and 2.

### [Example 7]

30.16 g of Cu(NO₃)₂3H₂O was dissolved in 40 g of water, and this mixture was added to 120 g of H₂WO₄ and sufficiently stirred, then dried to obtain the raw material mixture in Example 7.

The powder of Cu_{0.2}WO_{3.14} particles, which is the near-infrared absorbing material particles of Example 7, was obtained in the same manner as Example 2 except that the raw material mixture of Example 7 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 7 was measured by the powder X-ray diffraction method (θ-2θ method). When the crystal structure of the particles was determined from the X-ray diffraction pattern obtained, the same peak as the oblique crystal Cu_{0.26}WO₃ was confirmed.

The near-infrared absorbing material particle dispersing solution and the near-infrared absorbing material particle dispersion were prepared and evaluated in the same manner as Example 1, except that the near-infrared absorbing material particles in Example 7 were used. In addition, the dispersion medium was removed from the near-infrared absorbing material particle dispersing solution, and the crystal size of the composite tungsten oxide particles, which are the near-infrared absorbing material particles collected from the dispersing solution, was 26.1 nm.

The results are indicated in Tables 1 and 2.

### [Example 8]

0.66 g of Ag₂CO₃ was dissolved in 40 g of water, and this mixture was added to 120 g of H₂WO₄ and sufficiently stirred, then dried to obtain the raw material mixture in Example 8.

The powder of Ag_{0.01}WO_{3.16} particles, which is the near-infrared absorbing material particles of Example 8, was obtained in the same manner as Example 2 except that the raw material mixture of Example 8 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 8 was measured by the powder X-ray diffraction method (θ-2θ method). When the crystal structure of the particles was determined from the X-ray diffraction pattern obtained, the same peak as the oblique crystal Ag_{0.01}WO₃ was confirmed.

The near-infrared absorbing material particle dispersing solution and the near-infrared absorbing material particle dispersion were prepared and evaluated in the same manner as Example 1, except that the near-infrared absorbing material particles in Example 8 were used. In addition, the dispersion medium was removed from the near-infrared absorbing material particle dispersing solution, and the crystal size of the composite tungsten oxide particles, which are the near-infrared absorbing material particles collected from the dispersing solution, was 23.7 nm.

The results are indicated in Tables 1 and 2.

### [Example 9]

6.42 g of CaCO₃ was dissolved in 53 g of water, and this mixture was added to 160 g of H₂WO₄ and sufficiently stirred, then dried to obtain the raw material mixture in Example 9.

The powder of Ca_{0.09}WO_{3.14} particles, which is the near-infrared absorbing material particles of Example 9, was obtained in the same manner as Example 2 except that the raw material mixture of Example 9 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 9 was measured by the powder X-ray diffraction method (θ-2θ method). When the crystal structure of the particles was determined from the X-ray diffraction pattern obtained, the same peak as the hexagonal crystal Ca_{0.1}WO₃ was confirmed.

The near-infrared absorbing material particle dispersing solution and the near-infrared absorbing material particle dispersion were prepared and evaluated in the same manner as Example 1, except that the near-infrared absorbing material particles in Example 9 were used. In addition, the dispersion medium was removed from the near-infrared absorbing material particle dispersing solution, and the crystal size of the composite tungsten oxide particles, which are the near-infrared absorbing material particles collected from the dispersing solution, was 23.5 nm.

The results are indicated in Tables 1 and 2.

### [Example 10]

8.50 g of SrCO₃ was dissolved in 59 g of water, and this mixture was added to 180 g of H₂WO₄ and sufficiently stirred, then dried to obtain the raw material mixture in Example 10.

The powder of Sr_{0.01}WO_{3.16} particles, which is the near-infrared absorbing material particles of Example 10, was obtained in the same manner as Example 2 except that the raw material mixture of Example 10 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 10 was measured by the powder X-ray diffraction method (θ-2θ method). When the crystal structure of the particles was determined from the X-ray diffraction pattern obtained, the same peak as the hexagonal crystal Sr_{0.08}WO₃ was confirmed.

The near-infrared absorbing material particle dispersing solution and the near-infrared absorbing material particle dispersion were prepared and evaluated in the same manner as Example 1, except that the near-infrared absorbing material particles in Example 10 were used. In addition, the dispersion medium was removed from the near-infrared absorbing material particle dispersing solution, and the crystal size of the composite tungsten oxide particles, which are the near-infrared absorbing material particles collected from the dispersing solution, was 26.4 nm.

The results are indicated in Tables 1 and 2.

### [Example 11]

13.26 g of BaCO₃ was dissolved in 40 g of water, and this mixture was added to 120 g of H₂WO₄ and sufficiently stirred, then dried to obtain the raw material mixture in Example 11.

The powder of Ba_{0.14}WO_{3.14} particles, which is the near-infrared absorbing material particles of Example 11, was obtained in the same manner as Example 2 except that the raw material mixture of Example 11 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 11 was measured by the powder X-ray diffraction method (θ-2θ method). When the crystal structure of the particles was determined from the X-ray diffraction pattern obtained, the same peak as the hexagonal crystal Ba_{0.14}WO₃ was confirmed.

The near-infrared absorbing material particle dispersing solution and the near-infrared absorbing material particle dispersion were prepared and evaluated in the same manner as Example 1, except that the near-infrared absorbing material particles in Example 11 were used. In addition, the dispersion medium was removed from the near-infrared absorbing material particle dispersing solution, and the crystal size of the composite tungsten oxide particles, which are the near-infrared absorbing material particles collected from the dispersing solution, was 24.7 nm.

The results are indicated in Tables 1 and 2.

### [Example 12]

1.67 g of In₂O₃ and 150 g of H₂WO₄ were thoroughly mixed with a grinder to obtain the raw material mixture in Example 12.

The powder of In_{0.02}WO_{3.18} particles, which is the composite tungsten oxide particles of Example 12, was obtained in the same manner as Example 2 except that the raw material mixture of Example 12 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 12 was measured by the powder X-ray diffraction method (θ-2θ method). When the crystal structure of the particles was determined from the X-ray diffraction pattern obtained, the same peak as the tetragonal crystal In_{0.02}WO₃ was confirmed.

The near-infrared absorbing material particle dispersing solution and the near-infrared absorbing material particle dispersion were prepared and evaluated in the same manner as Example 1, except that the near-infrared absorbing material particles in Example 12 were used. In addition, the dispersion medium was removed from the near-infrared absorbing material particle dispersing solution, and the crystal size of the composite tungsten oxide particles, which are the near-infrared absorbing material particles collected from the dispersing solution, was 25.0 nm.

The results are indicated in Tables 1 and 2.

### [Example 13]

12.15 g of TINO₃ was dissolved in 180 g of water, and this mixture was added to 60 g of H₂WO₄ and sufficiently stirred, then dried to obtain the raw material mixture in Example 13.

The powder of Tl_{0.19}WO_{3.19} particles, which is the composite tungsten oxide particles of Example 13, was obtained in the same manner as Example 2 except that the raw material mixture of Example 13 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 13 was measured by the powder X-ray diffraction method (θ-2θ method). When the crystal structure of the particles was determined from the X-ray diffraction pattern obtained, the same peak as the hexagonal crystal Tl_{0.19}WO₃ was confirmed.

The near-infrared absorbing material particle dispersing solution and the near-infrared absorbing material particle dispersion were prepared and evaluated in the same manner as Example 1, except that the near-infrared absorbing material particles in Example 13 were used. In addition, the dispersion medium was removed from the near-infrared absorbing material particle dispersing solution, and the crystal size of the composite tungsten oxide particles, which are the near-infrared absorbing material particles collected from the dispersing solution, was 26.4 nm.

The results are indicated in Tables 1 and 2.

### [Example 14]

17.18 g of SnO₂ and 150 g of H₂WO₄ were thoroughly mixed with a grinder to obtain the raw material mixture in Example 14.

The powder of Sn_{0.19}WO_{3.16} particles, which is the composite tungsten oxide particles of Example 14, was obtained in the same manner as Example 2 except that the raw material mixture of Example 14 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 14 was measured by the powder X-ray diffraction method (θ-2θ method). When the crystal structure of the particles was determined from the X-ray diffraction pattern obtained, the same peak as the tetragonal crystal Sn_{0.19}WO₃ was confirmed.

The near-infrared absorbing material particle dispersing solution and the near-infrared absorbing material particle dispersion were prepared and evaluated in the same manner as Example 1, except that the near-infrared absorbing material particles in Example 14 were used. In addition, the dispersion medium was removed from the near-infrared absorbing material particle dispersing solution, and the crystal size of the composite tungsten oxide particles, which are the near-infrared absorbing material particles collected from the dispersing solution, was 23.9 nm.

The results are indicated in Tables 1 and 2.

### [Example 15]

17.98 g of Yb₂O₃ and 120 g of H₂WO₄ were thoroughly mixed with a grinder to obtain the raw material mixture in Example 15.

The powder of Yb_{0.18}WO_{3.16} particles, which is the composite tungsten oxide particles of Example 15, was obtained in the same manner as Example 2 except that the raw material mixture of Example 15 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 15 was measured by the powder X-ray diffraction method (θ-2θ method). When the crystal structure of the particles was determined from the X-ray diffraction pattern obtained, the same peak as the cubic crystal Yb_{0.19}WO₃ was confirmed.

The near-infrared absorbing material particle dispersing solution and the near-infrared absorbing material particle dispersion were prepared and evaluated in the same manner as Example 1, except that the near-infrared absorbing material particles in Example 15 were used. In addition, the dispersion medium was removed from the near-infrared absorbing material particle dispersing solution, and the crystal size of the composite tungsten oxide particles, which are the near-infrared absorbing material particles collected from the dispersing solution, was 24.3 nm.

The results are indicated in Tables 1 and 2.

### [Example 16]

17.25 g of Snowtex S, manufactured by Nissan Chemical Corporation and 150 g of H₂WO₄ were thoroughly mixed with a grinder to obtain the raw material mixture in Example 16.

The powder of Si_{0.04}WO_{3.14} particles, which is the composite tungsten oxide particles of Example 16, was obtained in the same manner as Example 2 except that the raw material mixture of Example 16 was fed into the plasma in the same manner as Example 2.

The particle size of the near-infrared absorbing material particles collected was in the range of 10 nm to 50 nm according to the TEM observation.

The X-ray diffraction pattern of the near-infrared absorbing material particles obtained in Example 16 was measured by the powder X-ray diffraction method (θ-2θ method). When the crystal structure of the particles was determined from the X-ray diffraction pattern obtained, the same peak as the cubic crystal Si_{0.04}WO_{2.839} was confirmed.

The near-infrared absorbing material particle dispersing solution and the near-infrared absorbing material particle dispersion were prepared and evaluated in the same manner as Example 1, except that the near-infrared absorbing material particles in Example 16 were used. In addition, the dispersion medium was removed from the near-infrared absorbing material particle dispersing solution, and the crystal size of the composite tungsten oxide particles, which are the near-infrared absorbing material particles collected from the dispersing solution, was 26.2 nm.

The results are indicated in Tables 1 and 2.

### [Example 17]

The composite tungsten oxide particles of Example 17 were prepared and evaluated in the same manner as in Example 2, except that the mixture gas of argon gas at 5 L/min and oxygen gas at 0.01 L/min as a carrier gas was used.

The particle size of the near-infrared absorbing material particles collected from the high-frequency plasma reaction device 30 was in the range of 10 nm to 50 nm according to the TEM observation.

The X-ray diffraction pattern of the near-infrared absorbing material particles obtained in Example 17 was measured by the powder X-ray diffraction method (θ-2θ method). When the crystal structure of the particles was determined from the X-ray diffraction pattern obtained, the same peak as the hexagonal crystal Cs_{0.3}WO₃ was confirmed.

The near-infrared absorbing material particle dispersing solution and the near-infrared absorbing material particle dispersion were prepared and evaluated in the same manner as Example 1, except that the near-infrared absorbing material particles in Example 17 were used. In addition, the dispersion medium was removed from the near-infrared absorbing material particle dispersing solution, and the crystal size of the composite tungsten oxide particles, which are the near-infrared absorbing material particles collected from the dispersing solution, was 24.5 nm, and the lattice constant determined by the Rietvelt method was 7.4148 Å on the a-axis and 7.5995 Å on the c-axis.

The results are indicated in Tables 1 and 2.

### [Example 18]

The composite tungsten oxide particles of Example 18 was prepared and evaluated in the same manner as in Example 2, except that the mixture gas of argon gas at 4 L/min and oxygen gas at 0.01 L/min as a carrier gas was used.

The particle size of the near-infrared absorbing material particles collected from the high-frequency plasma reaction device 30 was in the range of 10 nm to 50 nm according to the TEM observation.

The X-ray diffraction pattern of the near-infrared absorbing material particles obtained in Example 18 was measured by the powder X-ray diffraction method (θ-2θ method). When the crystal structure of the particles was determined from the X-ray diffraction pattern obtained, the same peak as the hexagonal crystal Cs_{0.3}WO₃ was confirmed.

The near-infrared absorbing material particle dispersing solution and the near-infrared absorbing material particle dispersion were prepared and evaluated in the same manner as Example 1, except that the near-infrared absorbing material particles in Example 18 were used. In addition, the dispersion medium was removed from the near-infrared absorbing material particle dispersing solution, and the crystal size of the composite tungsten oxide particles, which are the near-infrared absorbing material particles collected from the dispersing solution, was 21.7 nm, and the lattice constant determined by the Rietvelt method was 7.4116 Å on the a-axis and 7.5955 Å on the c-axis.

The results are indicated in Tables 1 and 2.

### [Example 19]

The composite tungsten oxide particles of Example 19 was prepared and evaluated in the same manner as in Example 2, except that the mixture gas of argon gas at 5 L/min and oxygen gas at 0.02 L/min as a carrier gas was used and the raw material mixture prepared in Example 1 was fed into the plasma at 2.5 g/min.

The particle size of the near-infrared absorbing material particles collected from the high-frequency plasma reaction device 30 was in the range of 10 nm to 50 nm according to the TEM observation.

The X-ray diffraction pattern of the near-infrared absorbing material particles obtained in Example 19 was measured by the powder X-ray diffraction method (θ-2θ method). When the crystal structure of the particles was determined from the X-ray diffraction pattern obtained, the same peak as the hexagonal crystal Cs_{0.3}WO₃ was confirmed.

The near-infrared absorbing material particle dispersing solution and the near-infrared absorbing material particle dispersion were prepared and evaluated in the same manner as Example 1, except that the near-infrared absorbing material particles in Example 18 were used. In addition, the dispersion medium was removed from the near-infrared absorbing material particle dispersing solution, and the crystal size of the composite tungsten oxide particles, which are the near-infrared absorbing material particles collected from the dispersing solution, was 19.1 nm, and the lattice constant determined by the Rietvelt method was 7.4137 Å on the a-axis and 7.6029 Å on the c-axis.

The results are indicated in Tables 1 and 2.

### [Example 20]

The composite tungsten oxide particles of Example 20 was prepared and evaluated in the same manner as in Example 2, except that the mixture gas of argon gas at 4.5 L/min and oxygen gas at 0.02 L/min as a carrier gas was used and the raw material mixture prepared in Example 1 was fed into the plasma at 2.5 g/min.

The particle size of the near-infrared absorbing material particles collected from the high-frequency plasma reaction device 30 was in the range of 10 nm to 50 nm according to the TEM observation.

The X-ray diffraction pattern of the near-infrared absorbing material particles obtained in Example 20 was measured by the powder X-ray diffraction method (θ-2θ method). When the crystal structure of the particles was determined from the X-ray diffraction pattern obtained, the same peak as the hexagonal crystal Cs_{0.3}WO₃ was confirmed.

The near-infrared absorbing material particle dispersing solution and the near-infrared absorbing material particle dispersion were prepared and evaluated in the same manner as Example 1, except that the near-infrared absorbing material particles in Example 18 were used. In addition, the dispersion medium was removed from the near-infrared absorbing material particle dispersing solution, and the crystal size of the composite tungsten oxide particles, which are the near-infrared absorbing material particles collected from the dispersing solution, was 16.8 nm, and the lattice constant determined by the Rietvelt method was 7.4149 Å on the a-axis and 7.5997 Å on the c-axis.

The results are indicated in Tables 1 and 2.

### [Example 21]

The dispersing solution for the coat film formation was prepared by weighing 14.0% by mass of the near-infrared absorbing material particles obtained in Example 19 and 86.0% by mass of pure water, loading them into a paint shaker (manufactured by Asada Iron Co., Ltd.) containing 0.3 mm φ of ZrO₂ beads, and crushing and dispersing them for 50 minutes. While stirring the dispersing solution, an isopropyl alcohol (IPA) solution of 44.0% by mass of aluminium ethylacetoacetate diisopropylate as an aluminum-based chelating compound was added to the dispersing solution dropwise over 5 hours. Subsequently, the surface-coated near-infrared absorbing material particle powder was obtained in Example 21 by evaporating the dispersion medium with use of a large vacuum grinder. Such near-infrared absorbing material particle powder is coated with a compound containing Al.

The near-infrared absorbing material particles dispersing solution in Example 21 was prepared by weighing 20.0% by mass of the surface-coated near-infrared absorbing material particles, 16.0% by mass of the dispersing agent a, and 64.0% by mass of methyl isobutyl ketone as the dispersion medium, loading them into a paint shaker (manufactured by Asada Iron Co., Ltd.) containing 0.3 mm φ of ZrO₂ beads, and dispersing them for 1 minute.

The near-infrared absorbing material particle dispersion was prepared and evaluated in the same manner as Example 1 except that the near-infrared absorbing material particle dispersing solution of Example 21 was used.

The results are indicated in Table 2.

### [Comparative Example 1]

The near-infrared absorbing material particles of Comparative Example 1 were prepared by firing the cesium tungsten oxide particles a obtained in Example 1 at 500°C for 1 hour under a 0.3% H₂ gas atmosphere using N₂ gas as the carrier gas.

The near-infrared absorbing material particles in Comparative Example 1 were calcined at 500°C for 1 hour under a 3% of H₂ gas atmosphere. Therefore, the dispersion and milling time of the near-infrared absorbing material particle dispersing solution was set to 2 hours, and the near-infrared absorbing material particles of Comparative Example 1 were used. The near-infrared absorbing material particle dispersing solution and the near-infrared absorbing material particle dispersion were prepared and evaluated in the same manner as in Example 1, except that the near-infrared absorbing material particles of Comparative Example 1 were used.

The X-ray diffraction pattern of the near-infrared absorbing material particles obtained in Comparative Example 1 was measured by the powder X-ray diffraction method (θ-2θ method). When the crystal structure of the particles was determined from the X-ray diffraction pattern obtained, the same peak as the hexagonal crystal Cs_{0.3}WO₃ was confirmed.

In addition, the dispersion medium was removed from the near-infrared absorbing material particle dispersing solution, and the crystal size of the composite tungsten oxide particles, which are the near-infrared absorbing material particles collected from the dispersing solution, was 9 nm, and the lattice constant determined was 7.4100 Å on the a-axis and 7.6300 Å on the c-axis.

The results are indicated in Tables 1 and 2.

### [Comparative Example 2]

A solution was obtained by dissolving 55.45 g of cesium carbonate (Cs₂CO₃) in 50 g of water. The solution was added to 286 g of tungstic acid (H₂WO₄) and sufficiently stirred and mixed before drying with stirring. The molar ratio of W to Cs in the dried product is W:Cs = 1:0.33.

The dried product was calcined at 800°C for 5.5 hours under a 5% of H₂ gas atmosphere using N₂ gas as the carrier gas, and then the supply gas was switched to N₂ gas only, and the temperature was lowered to room temperature to obtain cesium tungsten oxide particles, which are the near-infrared absorbing material particles of Comparative Example 2.

The X-ray diffraction pattern of the near-infrared absorbing material particles obtained in Comparative Example 2 was measured by the powder X-ray diffraction method (θ-2θ method). When the crystal structure of the particles was determined from the X-ray diffraction pattern obtained, the same peak as the hexagonal crystal Cs_{0.3}WO₃ was confirmed.

The near-infrared absorbing material particles dispersing solution in Comparative Example 2 was prepared by weighing 20.0% by mass of the near-infrared absorbing material particles of Comparative Example 2, 16.0% by mass of the dispersing agent a, and 64.0% by mass of methyl isobutyl ketone, loading them into a paint shaker (manufactured by Asada Iron Co., Ltd.) containing 0.3 mm φ of ZrO₂ beads, and crushing and dispersing them for 30 hours.

In addition, the near-infrared absorbing material particle dispersion was prepared in the same manner as Example 1, except that the near-infrared absorbing material particle dispersing solution in Comparative Example 2 was used. In addition, the dispersion medium was removed from the near-infrared absorbing material particle dispersing solution, and the crystal size of the composite tungsten oxide particles, which are the near-infrared absorbing material particles collected from the dispersing solution, was 9 nm, and the lattice constant was 7.4080 Å on the a-axis and 7.6310 Å on the c-axis.

The evaluation results are indicated in Table 1 and Table 2.

### [Summary]

As can be seen from Table 1, the near-infrared absorbing material particles of Examples 1 through 20 satisfied the relationship of 3. 0<z/y<3.4 for z and y in the general formula MₓW_{y}O_{z}.

As is obvious from Table 2, the near-infrared absorbers of Examples 1 to 21 manufactured using the near-infrared absorbing material particle dispersing solutions containing the near-infrared absorbing material particles of Examples 1 to 20 were confirmed to absorb and shield sunlight, particularly light in the near-infrared region, at the same level, while maintaining a high transmittance in the visible light region and excellent weather resistance compared to the near-infrared absorbers manufactured using the near-infrared absorbing material particle dispersing solution containing the near-infrared absorbing material particles of Comparative Examples 1 and 2. In particular, in Examples 1 to 21, the change rate (ΔST) of the solar radiation transmittance before and after the heat resistance evaluation and the weather resistance evaluation, which is the humidity resistance evaluation, is approximately zero, or the change rate is negative. The change rate in solar transmittance becoming over 1 means that the composite tungsten oxide particles will deteriorate upon exposure and the ability to absorb infrared light will deteriorate. Therefore, the results in Table 2 indicate that the composite tungsten oxide particles in the present embodiment have excellent weather resistance.

Above, the near-infrared absorbing material particles, the near-infrared absorbing material particle dispersing solution, and the near-infrared absorbing material particle dispersion have been described in the embodiments, Examples or the like. However, the present invention is not limited to the above-described embodiments, Examples, or the like. Various modifications and variations are possible within the scope of the scope of the invention as defined in the claims.

The present application is based on and claims priority of Patent Applications No. 2019-234889, filed December 25, 2019 with the Japan Patent Office.

## Claims

1. Near-infrared absorbing material particles comprising:
composite tungsten oxide particles represented by a general formula MₓW_{y}O_{z},
wherein the element M is one or more of elements selected from Cs, Rb, K, Tl, In, Ba, Li, Ca, Sr, Sn, Na, Cu, Ag, Yb and Si,
wherein the W is tungsten,
wherein the O is oxygen,
wherein the x, y, and z satisfy 0.001≤x/y≤1 and 3.0<z/y<3.4,
wherein a diameter of the near-infrared absorbing material particles is in the range of 10 nm to 100 nm, and wherein the diameter is the diameter of the smallest circle circumscribing the particle.

2. The near-infrared absorbing material particles according to claim 1,
wherein the element M contains one or more elements selected from Cs, Rb, K, Tl, In, Ba, Li, Ca, Sr, and Sn.

3. The near-infrared absorbing material particles according to claim 1 or 2,
wherein the composite tungsten oxide particles contain crystals of one or more crystal structures selected from hexagonal, tetragonal, and cubic crystals.

4. The near-infrared absorbing material particles according to any one of claims 1 to 3,
wherein the element M contains one or more elements selected from Cs and Rb,
wherein the composite tungsten oxide contains the hexagonal crystal structure, and
wherein lattice constants of the composite tungsten oxide are 7.3850 Å or more and 7.4186 Å or less on the a axis and 7.5600 Å or more and 7.6240 Å or less on the c axis.

5. The near-infrared absorbing material particles according to any one of claims 1 to 4,
wherein surfaces of the near-infrared absorbing material particles are coated with a compound containing one or more elements selected from Si, Ti, Zr, and Al.

6. A near-infrared absorbing material particle dispersing solution comprising:
the near-infrared absorbing material particles of any one of claims 1 to 5; and
a dispersion medium.

7. A near-infrared absorbing material particle dispersion comprising:
the near-infrared absorbing material particles of any one of claims 1 to 5; and
a solid medium.

8. The near-infrared absorbing material particle dispersion according to claim 7,
wherein the solid medium is a resin or glass.

9. The near-infrared absorbing material particle dispersion according to claim 8,
wherein the resin is of one or more resins selected from polyethylene terephthalate resin, polycarbonate resin, acrylic resin, polystyrene resin, polyamide resin, polyethylene resin, vinyl chloride resin, polyvinyl butyral resin, polyester resin, olefin resin, epoxy resin, polyimide resin, fluorine resin, ethylenevinyl acetate copolymer resin, and polyvinyl acetal resin.

10. The near-infrared absorbing material particle dispersion according to any one of claims 7 to 9,
wherein the near-infrared absorbing material particle dispersion contains 0.001% by mass or more and 80% by mass or less of the near-infrared absorbing material particles.

11. The near-infrared absorbing material particle dispersion according to any one of claims 7 to 10,
wherein the near-infrared absorbing material particle dispersion is in the form of a sheet, board, or film**.**

## Patentansprüche

1. Nahinfrarot-absorbierende Materialteilchen, aufweisend:
Verbund-Wolframoxid-Teilchen, die durch die allgemeine Formel MₓW_{y}O_{z} dargestellt sind,
wobei es sich bei Element M um ein oder mehrere Elemente handelt, die aus Cs, Rb, K, Tl, In, Ba, Li, Ca, Sr, Sn, Na, Cu, Ag, Yb und Si ausgewählt sind,
wobei es sich bei W um Wolfram handelt,
wobei es sich bei O um Sauerstoff handelt,
wobei x, y, und z die Ausdrücke 0,001 ≤ x/y ≤ 1 und 3,0 < z/y < 3,4 erfüllen,
wobei ein Durchmesser der nahinfrarot-absorbierenden Materialteilchen im Bereich von 10 nm bis 100 nm liegt und es sich bei dem Durchmesser um den Durchmesser des kleinsten Kreises handelt, der das Teilchen umschreibt.

2. Nahinfrarot-absorbierende Materialteilchen nach Anspruch 1,
wobei das Element M ein oder mehrere Elemente enthält, die aus Cs, Rb, K, Tl, In, Ba, Li, Ca, Sr und Sn ausgewählt sind.

3. Nahinfrarot-absorbierende Materialteilchen nach Anspruch 1 oder 2,
wobei die Verbund-Wolframoxid-Teilchen Kristalle mit einer oder mehreren Kristallstrukturen enthalten, die aus hexagonalen, tetragonalen und kubischen Kristallen ausgewählt sind.

4. Nahinfrarot-absorbierende Materialteilchen nach einem der Ansprüche 1 bis 3,
wobei das Element M ein oder mehrere Elemente enthält, die aus Cs und Rb ausgewählt sind,
wobei das Verbund-Wolframoxid die hexagonale Kristallstruktur enthält, und
wobei Gitterkonstanten des Verbund-Wolframoxids 7,3850 Å oder mehr und 7,4186 Å oder weniger auf der a-Achse und 7,5600 Å oder mehr und 7,6240 Å oder weniger auf der c-Achse betragen.

5. Nahinfrarot-absorbierende Materialteilchen nach einem der Ansprüche 1 bis 4,
wobei Oberflächen der nahinfrarot-absorbierenden Materialteilchen mit einer Verbindung beschichtet sind, die ein oder mehrere Elemente enthält, die aus Si, Ti, Zr, und Al ausgewählt sind.

6. Nahinfrarot-absorbierende Materialteilchen-Dispersionslösung, aufweisend:
die nahinfrarot-absorbierenden Materialteilchen nach einem der Ansprüche 1 bis 5; und
ein Dispersionsmedium.

7. Nahinfrarot-absorbierende Materialteilchen-Dispersion, aufweisend:
die nahinfrarot-absorbierenden Materialteilchen nach einem der Ansprüche 1 bis 5; und
ein festes Medium.

8. Nahinfrarot-absorbierende Materialteilchen-Dispersion nach Anspruch 7,
wobei es sich bei dem festen Medium um ein Harz oder Glas handelt.

9. Nahinfrarot-absorbierende Materialteilchen-Dispersion nach Anspruch 8,
wobei das Harz aus einem oder mehreren Harzen besteht, die aus einem Polyethylenterephthalat-Harz, Polycarbonat-Harz, Acryl-Harz, Polystyrol-Harz, Polyamid-Harz, Polyethylen-Harz, Vinylchlorid-Harz, Polyvinylbutyral-Harz, Polyester-Harz, Olefin-Harz, Epoxid-Harz, Polyimid-Harz, Fluor-Harz, Ethylen-Vinylacetat-Copolymer-Harz und Polyvinylacetal-Harz ausgewählt sind.

10. Nahinfrarot-absorbierende Materialteilchen-Dispersion nach einem der Ansprüche 7 bis 9,
wobei die Nahinfrarot-absorbierende Materialteilchen-Dispersion 0,001 Masse-% oder mehr und 80 Masse-% oder weniger der nahinfrarot-absorbierenden Materialteilchen enthält.

11. Nahinfrarot-absorbierende Materialteilchen-Dispersion nach einem der Ansprüche 7 bis 10,
wobei die Nahinfrarot-absorbierende Materialteilchen-Dispersion in Form eines Blatts, einer Platte oder einer Folie vorliegt.

## Revendications

1. Particules de matériau absorbant le proche infrarouge, comprenant :
des particules d'oxyde de tungstène composite représentées par une formule générale MₓW_{y}O_{z},
dans lesquelles l'élément M est un ou plusieurs éléments choisis parmi Cs, Rb, K, Tl, In, Ba, Li, Ca, Sr, Sn, Na, Cu, Ag, Yb et Si,
dans lesquelles le W est le tungstène,
dans lesquelles le O est l'oxygène,
dans lesquelles x, y et z satisfont 0,001≤x/y≤1 et 3,0<z/y<3,4,
dans lesquelles un diamètre des particules de matériau absorbant le proche infrarouge est dans la plage de 10 nm à 100 nm, et dans lesquelles le diamètre est le diamètre du plus petit cercle entourant la particule.

2. Particules de matériau absorbant le proche infrarouge selon la revendication 1,
dans lesquelles l'élément M contient un ou plusieurs éléments choisis parmi Cs, Rb, K, Tl, In, Ba, Li, Ca, Sr et Sn.

3. Particules de matériau absorbant le proche infrarouge selon la revendication 1 ou 2,
dans lesquelles les particules d'oxyde de tungstène composite contiennent des cristaux d'une ou plusieurs structures cristallines choisies parmi des cristaux hexagonaux, tétragonaux et cubiques.

4. Particules de matériau absorbant le proche infrarouge selon l'une quelconque des revendications 1 à 3, dans lesquelles
dans lesquelles l'élément M contient un ou plusieurs éléments choisis parmi Cs et Rb,
dans lesquelles l'oxyde de tungstène composite contient la structure cristalline hexagonale, et
dans lesquelles des constantes de réseau de l'oxyde de tungstène composite sont de 7,3850 Å ou plus et de 7,4186 Å ou moins sur l'axe a, et de 7,5600 Å ou plus et de 7,6240 Å ou moins sur l'axe c.

5. Particules de matériau absorbant le proche infrarouge selon l'une quelconque des revendications 1 à 4, dans lesquelles
des surfaces des particules de matériau absorbant le proche infrarouge sont revêtues d'un composé contenant un ou plusieurs éléments choisis parmi Si, Ti, Zr et Al.

6. Solution de dispersion de particules de matériau absorbant le proche infrarouge comprenant :
les particules de matériau absorbant le proche infrarouge selon l'une quelconque des revendications 1 à 5 ; et
un milieu de dispersion.

7. Dispersion de particules de matériau absorbant le proche infrarouge, comprenant :
les particules de matériau absorbant le proche infrarouge selon l'une quelconque des revendications 1 à 5 ; et
un milieu solide.

8. Dispersion de particules de matériau absorbant le proche infrarouge selon la revendication 7,
dans laquelle le milieu solide est une résine ou du verre.

9. Dispersion de particules de matériau absorbant le proche infrarouge selon la revendication 8,
dans laquelle la résine est une ou plusieurs résines choisies parmi une résine de téréphtalate de polyéthylène, une résine de polycarbonate, une résine acrylique, une résine de polystyrène, une résine de polyamide, une résine de polyéthylène, une résine de chlorure de vinyle, une résine de butyral de polyvinyle, une résine de polyester, une résine d'oléfine, une résine époxy, une résine de polyimide, une résine de fluor, une résine de copolymère d'éthylène-acétate de vinyle et une résine d'acétal de polyvinyle.

10. Dispersion de particules absorbant le proche infrarouge selon l'une quelconque des revendications 7 à 9,
dans laquelle la dispersion de particules de matériau absorbant le proche infrarouge contient 0,001 % en masse ou plus et 80 % en masse ou moins des particules de matériau absorbant le proche infrarouge.

11. Dispersion de particules absorbant le proche infrarouge selon l'une quelconque des revendications 7 à 10,
dans laquelle la dispersion de particules de matériau absorbant le proche infrarouge se présente sous la forme d'une feuille, d'un panneau ou d'un film.
